# EUROPEAN PATENT APPLICATION

(11) **EP 4 825 862 A2**
(43) Date of publication of application: **21.10.2026**
(21) Application number: 26203294.9
(22) Date of filing: 24.06.2019
(51) Int. Cl.: C07F 7/08

(54) **POLYOXYALKYLENE COUPLED ZWITTERIONIC MOIETY AND SURFACE ACTIVE REACTIVE POLYMERS, COATING COMPOSITIONS AND FOULING CONTROL COATINGS THEREOF**

(30) Priority: 25.06.2018 US 201862689592 P; 25.06.2018 US 201862689627 P
(62) Document number(s) of the earlier application(s) in accordance with Art. 76 EPC: 19826642.1 / 3 810 616
(71) Applicant: PPG Industries Ohio, Inc., Cleveland, OH 44111 (US)
(72) Inventor: KHATRI, Chetan Anirudh, Cleveland, 44111 (US); GALHENAGE, Teluka Pasan, Cleveland, 44111 (US); LOMAKIN, Joseph, Cleveland, 44111 (US); KIM, Philseok, Cleveland, 44111 (US); LABAK, Andrew Keelan, Cleveland, 44111 (US)
(74) Representative: Appleyard Lees IP LLP

(57) **Abstract**

A variety of polyoxyalkylene coupled zwitterionic moieties are provided as well as surface active reactive polymers containing the polyoxyalkylene coupled zwitterionic moieties. When incorporated in coating systems, such surface active polymers show strong propensity to stratify during curing. The zwitterionic groups presented at the end of polyalkylene oxide chains can allow for effective exposure of the zwitterionic groups at the coating/water interface as the polyoxyalkylene side chains of the said SAP can further extend (to its radius of gyration) into the water phase. Additional features of the polyoxyalkylene coupled zwitterionic moieties can include a reactive end group (R) to allow covalent attachment of the moiety to a surface, a particle, a small molecule, or a polymer. Coating compositions and coated articles containing the polyoxyalkylene coupled zwitterionic moieties are also provided.

## Description

### CROSS-REFERENCE TO RELATED APPLICATIONS

This application claims priority to, and the benefit of, co-pending U.S. provisional application entitled "POLYOXYALKYLENE COUPLED ZWITTERIONIC MOIETY AND SURFACE ACTIVE REACTIVE POLYMERS, COATING COMPOSITIONS AND FOULING CONTROL COATINGS THEREOF" having serial no. 62/689,592, filed June 25, 2018 (Attorney Docket: 921904-8110) and co-pending U.S. provisional application entitled "SIDECHAIN FUNCTIONALIZED LUBRICATING OILS, COATING COMPOSITIONS AND FOULING CONTROL COATINGS THEREOF" having serial no. 62/689,627, filed June 25, 2018 (Attorney Docket: 921904-8130), the contents of which are incorporated by reference in their entirety.

### BACKGROUND

Biofouling of surfaces is a persistent problem across industries. Traditionally siliconebased materials are known to have low adhesion towards biofouling. However, given the broad spectrum of foulants and their diversity for surface adhesion preferences, silicone materials provide an incomplete solution. For example slime films of *N.incerta* (marine diatom) are a common example of a biofouling organism that display stronger adhesion to silicone surface. To advance the performance of silicone materials for biofouling control, more modern approaches try to combine protein resistant hydrophilic moieties with silicone to improve biofouling protection against a broad spectrum of bio-foulants.

Zwitterionic groups has shown biofouling prevention efficiency attributed to the strong electrically induced hydration layer (Callows J.A. et al. Nat Commun 2011, 2, 244). It is hypothesized that, zwitterionic groups when presented on a surface is able to maintain a more tightly held hydration layer compared to polyethylene oxide groups leading to improved biofouling performance. Zwitterionic groups has also shown anti-ice properties (Chuan Li et al. ACS Appl. Mater. Interfaces 2017, 9, 22959-22969) and cryoprotectant properties (Jing Yang et al. Scientific Reports 2016, 6, 37458) attributed strong binding to water molecules via ionic solvation to reduce water chemical potential, and the resultant inhibition of water crystallization and depression of water freezing. Majority of the prior art demonstrate the synthesis and development of surfaces with zwitterionic groups using controlled radical polymerization (CRP) techniques such as ATRP, and RAFT (Zhang Z. et al. Langmuir 2009, 25 (23), 13516-13521). These techniques result in hydrophilic materials that are extremely challenging to incorporate into a practical coating system due to their hydroscopic nature. As a result, most literature examples of well performing zwitterionic systems remain as surface grafting approach. Such surfaces show initial promise as good biofouling resistant surface, but eventually fail due to lack of secondary protection beyond the surface hydrophilicity.

There remains a need for improved surface coating compositions that overcome the aforementioned deficiencies.

### SUMMARY

In various aspects, polyoxyalkylene zwitterionic moieties and sidechain functionalized organosiloxane polymers containing the polyoxyalkylene zwitterionic moieties are provided that overcome one or more of the aforementioned deficiencies. The polyoxyalkylene zwitterionic moieties and the polymers containing the polyoxyalkylene zwitterionic moieties as sidechains can be applied directly to a surface and/or can be applied to a base resin, e.g. either before or during curing to coat a surface of a substrate or article. Coating compositions and coated articles are also provided.

In some aspects, the polyoxyalkylene zwitterionic moieties can be added to a base resin, e.g. prior to or during curing. In some aspects, the sidechain functionalized organosiloxane polymers can be added to a base resin, e.g. prior to or during curing. Additive compositions are provided containing the polyoxyalkylene zwitterionic moieties and/or the sidechain functionalized polymers. In addition, compositions are provided containing the base resin and the polyoxyalkylene zwitterionic moieties and/or the sidechain functionalized polymers.

In some aspects, a polyoxyalkylene zwitterionic moiety is provided having: (i) a polyoxyalkylene chain having a first end and a second end opposite the first end; (ii) a reactive end group covalently attached to the first end, optionally using a linker; and (iii) a zwitterionic moiety covalently attached at the second, optionally using a linker. In other aspects, a polyoxyalkylene zwitterionic moiety is provided having: (i) a polyoxyalkylene chain; (ii) a zwitterionic moiety covalently attached at a first end of the polyoxyalkylene chain, optionally using a linker; and (iii) a reactive end group covalently attached to the zwitterionic moiety, optionally using a linker.

In some aspects, a polyoxyalkylene zwitterionic moiety is provided having a structure according to the following formula:

Rx₆-L₆-A₆-L'₆-Z₆.

In some aspects, a polyoxyalkylene zwitterionic moiety is provided having a structure according to the following formula:

Rx₆-L₆-Z₆-L'₆-A₆

In the above structures, each occurrence of Z₆ can be a zwitterionic moiety; each occurrence of A₆ can be a substituted or unsubstituted hydrophilic polyoxyalkylene; each occurrence of L₆ and L'₆ can independently be none, a C₁-C₁₂ alkyl or heteroalkyl linker, or a C₁-C₅ alkyl or heteroalkyl linker; and each occurrence of Rx₆ can be a reactive end group.

In some aspects, a zwitterionic sidechain functionalized organosiloxane is provided having: (i) an organosiloxane backbone; (ii) at least one polyoxyalkylene chain having a tethered end covalently attached to the polysiloxane backbone and a free end opposite to the tethered end; (iii) a zwitterionic moiety covalently attached at the free end of the polyoxyalkylene chain; and (iv) at least one reactive end group.

In some aspects, a zwitterionic sidechain functionalized organosiloxane is provided having: (i) an organosiloxane backbone; (ii) a zwitterionic moiety covalently attached to the polysiloxane backbone; (iii) at least one polyoxyalkylene chain having a tethered end covalently attached to the zwitterionic moiety and a free end opposite to the tethered end; and (iv) at least one reactive end group.

The polyoxyalkylene chain can be selected from the group consisting of poly(ethylene glycol), poly(propylene glycol), poly(ethylene glycol-ran-propylene glycol), poly(ethylene glycol-block¬-propylene glycol), poly(butylene glycol), co-polymers containing poly(butylene glycol), and a combination thereof.

The polyoxyalkylene zwitterionic moieties and the sidechain functionalized polymers containing the polyoxyalkylene zwitterionic moieties can include a variety of reactive groups. In some aspects, the reactive end group is selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

A variety of polymer compositions are provided including a) a base resin composition including (i) one or more different polymeric precursors capable of curing to form a cured resin and (ii) a polyoxyalkylene zwitterionic moiety and/or a zwitterionic sidechain functionalized organosiloxane described herein that has reactive end groups capable of reacting with the one or more different polymeric precursors; wherein, when the base resin composition is cured to form the cured resin, the reactive end groups in react with the one or more different polymeric precursors so that the polyoxyalkylene zwitterionic moiety and/or a zwitterionic sidechain functionalized organosiloxane is integrated into the cured resin.

A variety of articles are also provided containing a substrate coated with a polyoxyalkylene zwitterionic moiety and/or a zwitterionic sidechain functionalized organosiloxane described herein, e.g. coated with a polymer composition described herein. Suitable substrates can include a polymer, a metal, a sapphire, a glass, a carbon, a ceramic, and a composite thereof.

Other systems, methods, features, and advantages of the polyoxyalkylene zwitterionic moieties, zwitterionic sidechain functionalized organosiloxanes, polymer compositions, and coated articles and particles will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Further aspects of the present disclosure will be readily appreciated upon review of the detailed description of its various embodiments, described below, when taken in conjunction with the accompanying drawings.
**FIG. 1** is a schematic showing (top) the result of common surface grafting techniques that create polyzwitterionic brushes on a substrate surface upon exposure to water and (bottom) the approach of polyoxyalkylene coupled zwitterionic (POA-ZW) sidechain functionalized organosiloxane incorporated into a coating system. Upon exposure to water, POA chains extend to expose the zwitterionic groups creating stronger hydration effects compared to surface grafting.
**FIG. 2** is a schematic of a polyoxalkylene coupled zwitterionic moiety according to various aspect of the disclosure.
**FIG. 3** is a schematic of a surface active polymer incorporating a polyoxalkylene coupled zwitterionic moiety according to various aspects of the disclosure.

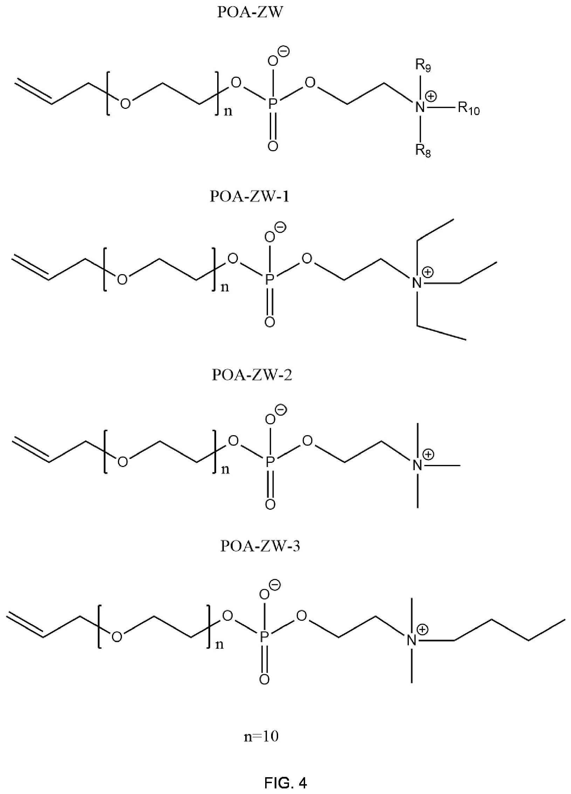

**FIG. 4** is chemical structures of exemplary Polyoxyalkylene Coupled Zwitterionic Moieties (POA-ZW) with reactive groups on one end.

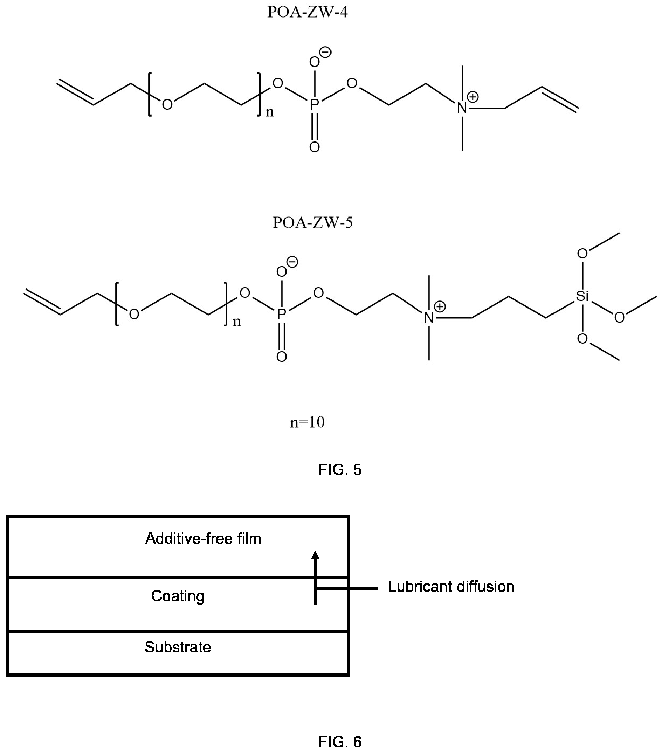

**FIG. 5** is chemical structures of exemplary Polyoxyalkylene Coupled Zwitterionic Moieties (POA-ZW) with reactive groups on both ends.
**FIG. 6** is a schematic of the test setup for the release kinetics experiment.
**FIG. 7** is a graph of the release kinetics of an amphiphilic lubricants over 24 hours
**FIG. 8** is a photograph of the miscibility scale used for the experiment, with 1 being least miscible and 5 being the most miscible
**FIG. 9** is photographs of coated panels after 12 weeks exposure in Port Canaveral, FL with species and coverage analysis. Uncoated PVC panel was used as the negative control and each treatment had 4 replicates.
**FIG. 10** is photographs of coated panels after 12 weeks exposure in Port Canaveral, FL. Uncoated PVC panel was used as the negative control and each treatment had 4 replicates.
**FIG. 11** is a graph of SAP concentration as a function of etch depth derived from an XPS depth profiling experiment for a coating prepared from an example formulation with AM-26 (100156). SAP concentration is highest at the surface and monotonically decreases, confirming SAP stratification near the coating surface.

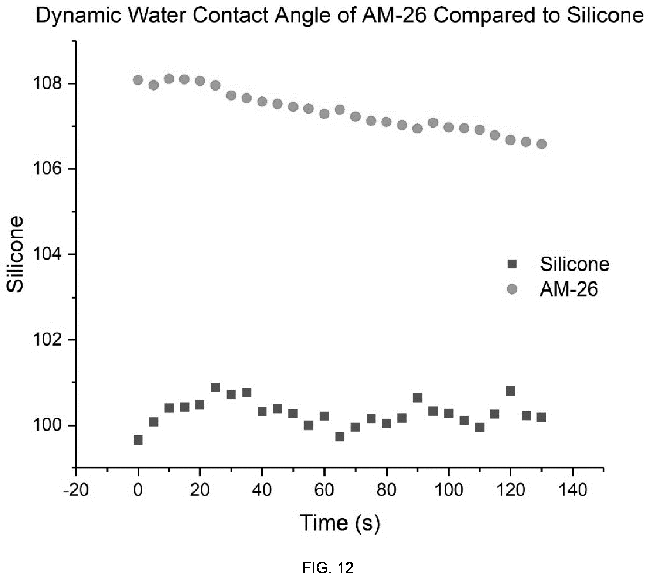

**FIG. 12** is a graph showing the dynamic wetting properties (water contact angle decrease over time) of 100155 which contains AM-26. In contrast, the unmodified silicone shows no dynamic wetting properties.

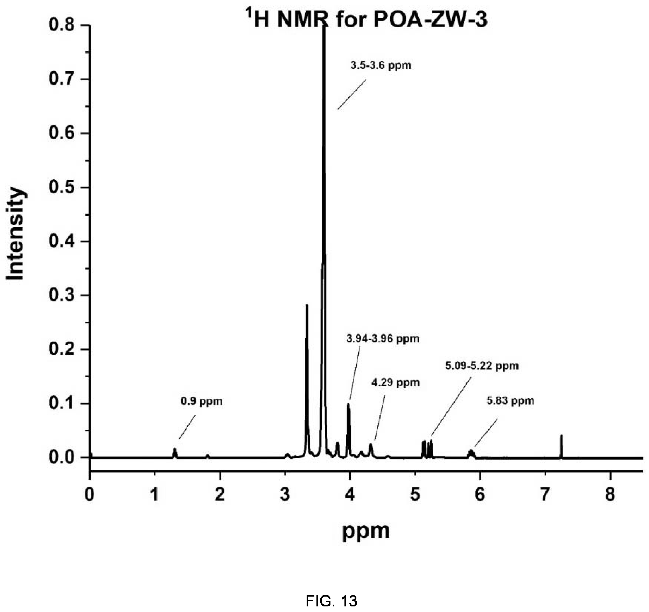

**FIG. 13** is a ¹H NMR spectrum for POA-ZW-3. The final product obtained with ring opening with dimethylbutyl amine can be identified by the peak at 0.9 ppm corresponding to the H from butyl group, allyl peaks at 5.09-5.22 and 5.83, PEG peaks at 3.5-3.6 ppm.

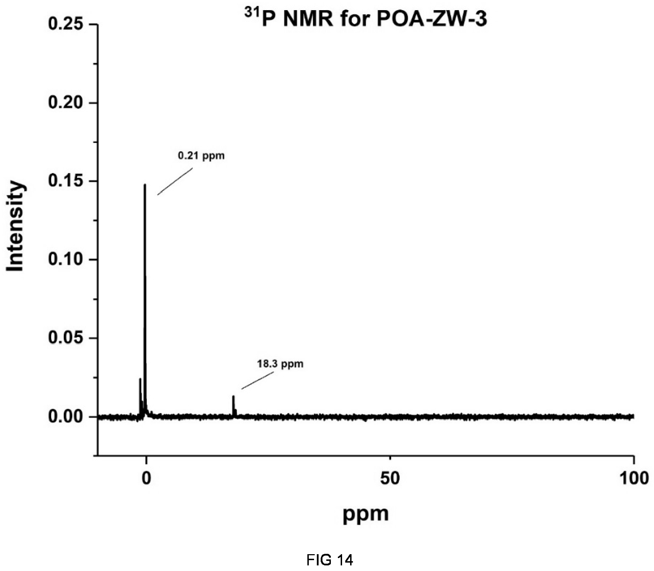

**FIG. 14** is a ³¹P NMR spectrums for POA-ZW-3. The final product obtained with ring opening with dimethylbutyl amine can be identified by the peak at 0-0.21 ppm.

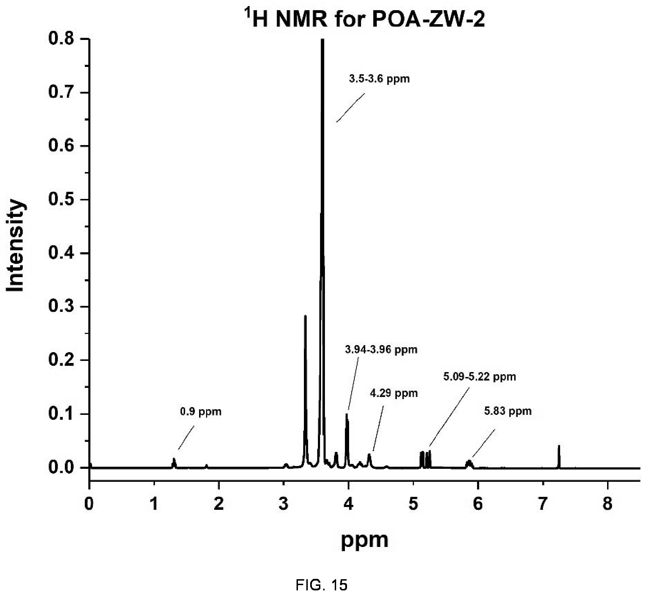

**FIG. 15** is a ¹H NMR spectrum for POA-ZW-3. The final product obtained with ring opening with dimethylbutyl amine can be identified by the peak at 0.9 ppm corresponding to the H from butyl group, allyl peaks at 5.09-5.22 and 5.83, PEG peaks at 3.5-3.6 ppm.

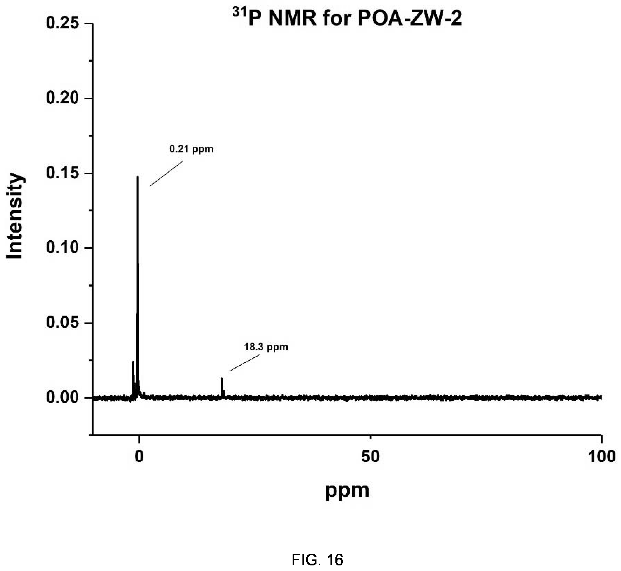

**FIG. 16** is a ³¹P NMR spectrums for POA-ZW-2. The final product obtained with ring opening with trimethyl amine can be identified by the peak at 0-0.21 ppm.

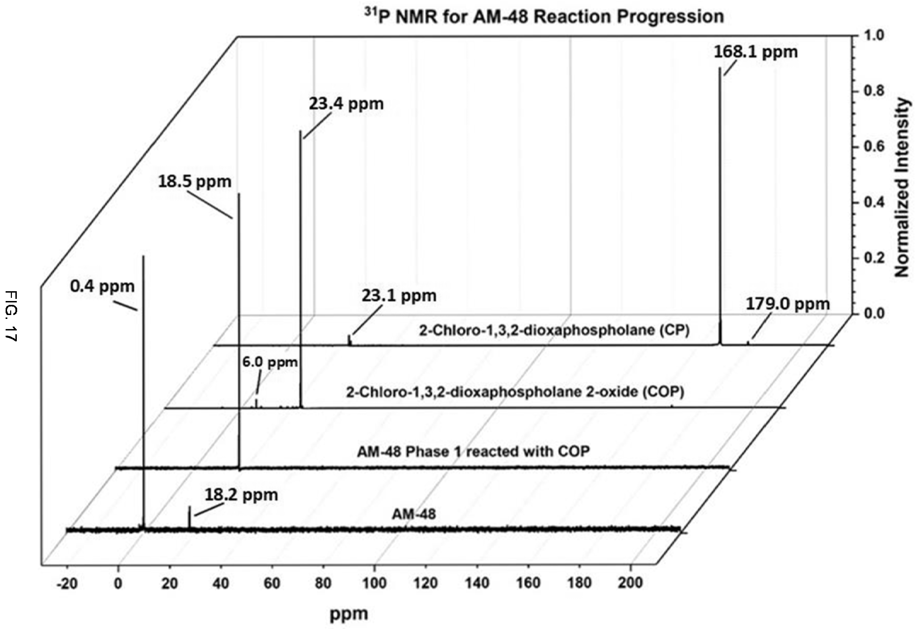

**FIG. 17** is a set of ³¹P NMR spectra for AM-48 synthesis. In the first step, 2-chloro-1,3,2-dioxaphospholane-2-oxide (COP) was made by oxygenating 2-chloro-1,3,2-dioxaphospholane (CP) indicated by the peak shift from 168.1 ppm to 23.4 ppm. Then COP was reacted with the terminal hydroxyl groups of polyethylene glycol side chains indicated by the peak shift from 23.4 ppm to 18.2-18.5 ppm. Finally, the ring opening with tertiary amine was successfully completed as indicated by the peak shift from 18.2-18.5 ppm to 0-0.4 ppm.

### DETAILED DESCRIPTION

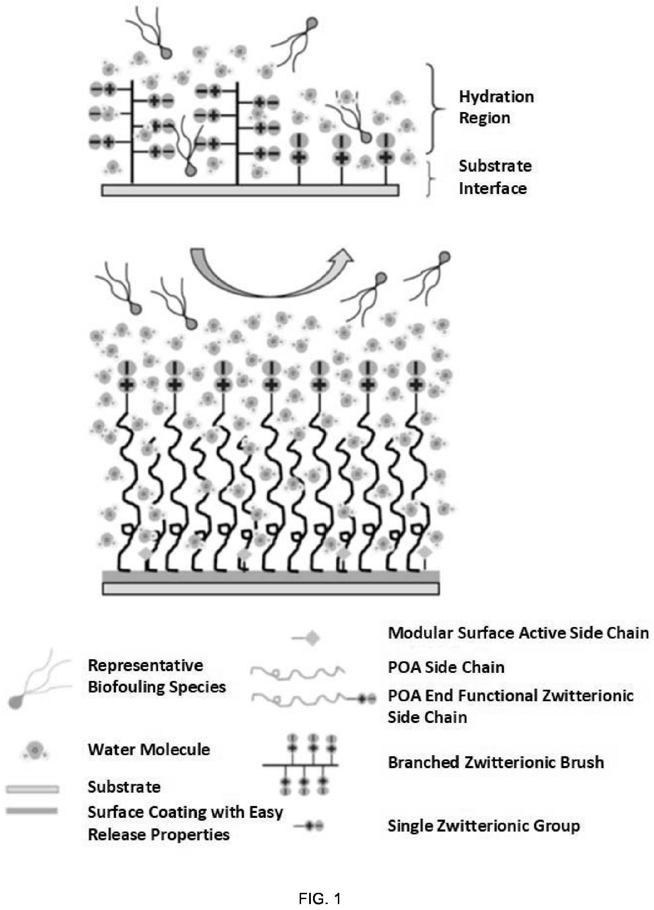

The present disclosure describes a variety of modular, customizable surface active polymers (SAPs) including zwitterionic, polyalkyleneoxide, and reactive functional groups as well as such moieties included as side chains on a polysiloxane backbone. Further, when incorporated in coating systems, such surface active polymers show strong propensity to stratify during curing. Therefore, the resultant coatings are able to present active groups on the surface leading to effective biofouling resistance properties and/or ice-phobic properties. Further, not wishing to be bound by any particular theory, it is believed that having the zwitterionic groups presented at the end of polyalkylene oxide chains allow for effective exposure of the zwitterionic groups at the coating/water interface as the polyoxyalkylene side chains of the said SAP can further extend (to its radius of gyration) into the water phase (see **FIG. 1**).

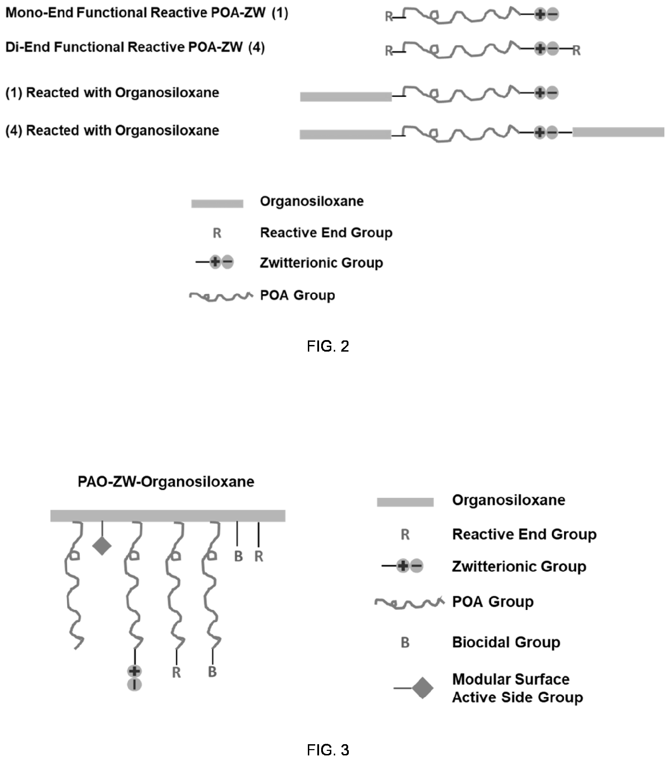

The present disclosure therefore provides a chemical moiety that contains a directly coupled polyoxyalkylene (POA) and a zwitterionic (ZW) group, POA-ZW. The present disclosure demonstrates these POA-ZW can achieve effective reduction of the attachment of biofouling or ice formation on a surface or a coating containing a POA-ZW moiety. For example, a polymer comprising a POA-ZW moiety can be prepared then such a polymer can be introduced in a coating system in order to reduce biofouling attachment or ice formation. **FIG. 2** presents a structural schematic for the POA-ZW moiety.

Additional features of the POA-ZW moiety can include a reactive end group (R) to allow covalent attachment of the moiety to a surface, a particle, a small molecule, or a polymer. For example, one or more POA-ZW moiety can be directly attached to a polysiloxane to form a surface active polymer (SAP). The SAP can be of linear or branched structure, can optionally contain a polyorganosiloxane segment, and can contain a reactive group at the end for covalent attachment to yet another polymeric compounds, a small molecule, or a surface.

In some aspects, a compound having a POA-ZW moiety is used as a modifier to functionalize materials and surfaces directly or used as a building block and included as part of a surface active polymer (SAP) for use in coatings. Such surface active polymers (SAPs) can be of a form depicted in **FIG. 3**.

Such surface-active polymers can contain additional polyoxyalkylene and zwitterionic sidechains, additional polysiloxane sidechains, and a sidechain comprising a biocidal moiety. Such SAPs can have a reactive group for covalent attachment to coating binder systems. Not wishing to be bound by any particular theory, it is believed that the SAP can migrate close to the surface during curing of the coating and upon exposure to water, the POA-ZW moieties dynamically align toward the water at the interface of water and coating. This promotes adequate hydration of the coating surface when exposed to water, and as a consequence, the coating can resist biofouling.

Such SAPs can be formulated into coating topcoats, tiecoats or primers. Such SAPs can be utilized in fouling control coatings that do or do not contain biocides. Such SAPs can be incorporated in coatings with siloxane, epoxy, urethane, or other binder systems.

In some aspects, the moieties contain an allyl functional polyethylene oxide-phosphoryl choline zwitterionic monomer, an allyl functional polyethylene oxide-sulfobetaine zwitterionic monomer, an allyl functional polyethylene oxide-carboxybetaine zwitterionic monomer, or an allyl functional polyethylene oxide-trimethylamine *N*-oxide zwitterionic monomer, synthesized and can be used as a precursor for obtaining a surface active polymer comprising a polyalkyleneoxide-zwitterionic moiety (SAP-POA-ZW)

In some aspects, the SAP-POA-ZWs contain a directly coupled polyoxyalkylene-zwitterionic moiety to control biofouling with a terminal reactive group for addition to materials, surfaces, polymers and small molecules for biofouling control

In some aspects, the SAP-POA-ZWs contain a directly coupled polyoxyalkylene-zwitterionic moiety containing a polysiloxane segment for surface partitioning for use in biofouling control

In some aspects, the SAP-POA-ZWs contain a directly coupled polyoxyalkylene-zwitterionic moiety containing a polysiloxane segment to control biofouling with one or more terminal reactive groups for addition to materials, surfaces, polymers and small molecules for biofouling control

In some aspects, the SAP-POA-ZWs contain polyoxyalkylene-zwitterionic moiety and optionally containing additional zwitterionic and polyoxyalkylene segments, with one or more reactive groups substantially reactive with the coating system

In some aspects, the SAP-POA-ZWs are included in fouling control coatings (including topcoats, tiecoats and primers) and materials

In some aspects, the SAP-POA-ZWs are included in fouling control coatings (including topcoats, tiecoats and primers) comprising other polyoxyalkylene-zwitterionic moiety-containing SAPs

In some aspects, the SAP-POA-ZWs are included in fouling control coatings (including topcoats, tiecoats and primers) comprising otherpolyoxyalkylene-zwitterionic moiety-containing SAPs that also contain releasing biocides

In some aspects, the SAP-POA-ZWs are included in erodable fouling control coatings (including topcoats, tiecoats and primers) comprising other polyoxyalkylene-zwitterionic moiety-containing SAPs that also contain releasing biocides

In some aspects, the SAP-POA-ZWs are included in fouling control coatings (including topcoats, tiecoats and primers) comprising polyoxyalkylene-zwitterionic moiety containing oils

All publications and patents cited in this specification are cited to disclose and describe the methods and/or materials in connection with which the publications are cited. All such publications and patents are herein incorporated by references as if each individual publication or patent were specifically and individually indicated to be incorporated by reference. Such incorporation by reference is expressly limited to the methods and/or materials described in the cited publications and patents and does not extend to any lexicographical definitions from the cited publications and patents. Any lexicographical definition in the publications and patents cited that is not also expressly repeated in the instant specification should not be treated as such and should not be read as defining any terms appearing in the accompanying claims. The citation of any publication is for its disclosure prior to the filing date and should not be construed as an admission that the present disclosure is not entitled to antedate such publication by virtue of prior disclosure. Further, the dates of publication provided could be different from the actual publication dates that may need to be independently confirmed.

Although any methods and materials similar or equivalent to those described herein can also be used in the practice or testing of the present disclosure, the preferred methods and materials are now described. Functions or constructions well-known in the art may not be described in detail for brevity and/or clarity. Embodiments of the present disclosure will employ, unless otherwise indicated, techniques of nanotechnology, organic chemistry, material science and engineering and the like, which are within the skill of the art. Such techniques are explained fully in the literature.

It should be noted that ratios, concentrations, amounts, and other numerical data can be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to about 5%" should be interpreted to include not only the explicitly recited values of about 0.1% to about 5%, but also include individual values (e.g., 1%, 2%, 3%, and 4%) and the sub-ranges (*e.g*., 0.5%, 1.1%, 2.2%, 3.3%, and 4.4%) within the indicated range. Where the stated range includes one or both of the limits, ranges excluding either or both of those included limits are also included in the disclosure, e.g. the phrase "x to y" includes the range from 'x' to 'y' as well as the range greater than 'x' and less than 'y'. The range can also be expressed as an upper limit, e.g. 'about x, y, z, or less' and should be interpreted to include the specific ranges of 'about x', 'about y', and 'about z' as well as the ranges of 'less than x', less than y', and 'less than z'. Likewise, the phrase 'about x, y, z, or greater' should be interpreted to include the specific ranges of 'about x', 'about y', and 'about z' as well as the ranges of 'greater than x', greater than y', and 'greater than z'. In some embodiments, the term "about" can include traditional rounding according to significant figures of the numerical value. In addition, the phrase "about 'x' to 'y'", where 'x' and 'y' are numerical values, includes "about 'x' to about 'y'".

### Definitions

Unless defined otherwise, all technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

The articles "a" and "an," as used herein, mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

Throughout the application, where language such as having, including, or comprising is used to describe specific components or process steps, it is contemplated that other aspects exist that consist essentially of, or consist of the specific components or process steps.

The term "substantially free" as used in this context means the reaction product and/or coating compositions contain less than 1000 parts per million (ppm),"essentially free" means less than 100 ppm and "completely free" means less than 20 parts per billion (ppb) of any of the above compounds or derivatives or residues thereof. The term "about," as used herein, means approximately, in the region of, roughly, or around. When the term "about" is used with a numerical value, it modifies that value by extending the boundaries above and below the numerical value set forth. For example, in some aspects, the term "about" is used herein to modify a numerical value above and below the stated value by a variance of ±20%, ±15%, or ±10% of the stated value. In some aspects, the term "about" can reflect traditional uncertainties in experimental measurements and/or traditional rounding according to significant figures of the numerical value.

The term "alkyl" refers to the radical of saturated aliphatic groups, including straight-chain alkyl groups, branched-chain alkyl groups, cycloalkyl (alicyclic) groups, alkyl-substituted cycloalkyl groups, and cycloalkyl-substituted alkyl groups.

In some aspects, a straight chain or branched chain alkyl has 30 or fewer carbon atoms in its backbone (e.g., C₁-C₃₀ for straight chains, C₃-C₃₀ for branched chains), 20 or fewer, 12 or fewer, or 7 or fewer. Likewise, in some embodiments cycloalkyls have from 3-10 carbon atoms in their ring structure, e.g. have 5, 6 or 7 carbons in the ring structure. The term "alkyl" (or "lower alkyl") as used throughout the specification, examples, and claims is intended to include both "unsubstituted alkyls" and "substituted alkyls", the latter of which refers to alkyl moieties having one or more substituents replacing a hydrogen on one or more carbons of the hydrocarbon backbone. Such substituents include, but are not limited to, halogen, hydroxyl, carbonyl (such as a carboxyl, alkoxycarbonyl, formyl, or an acyl), thiocarbonyl (such as a thioester, a thioacetate, or a thioformate), alkoxyl, phosphoryl, phosphate, phosphonate, a hosphinate, amino, amido, amidine, imine, cyano, nitro, azido, sulfhydryl, alkylthio, sulfate, sulfonate, sulfamoyl, sulfonamido, sulfonyl, heterocyclyl, aralkyl, or an aromatic or heteroaromatic moiety.

Unless the number of carbons is otherwise specified, "lower alkyl" as used herein means an alkyl group, as defined above, but having from one to ten carbons, or from one to six carbon atoms in its backbone structure. Likewise, "lower alkenyl" and "lower alkynyl" have similar chain lengths. Throughout the application, preferred alkyl groups are lower alkyls. In some embodiments, a substituent designated herein as alkyl is a lower alkyl.

It will be understood by those skilled in the art that the moieties substituted on the hydrocarbon chain can themselves be substituted, if appropriate. For instance, the substituents of a substituted alkyl may include halogen, hydroxy, nitro, thiols, amino, azido, imino, amido, phosphoryl (including phosphonate and phosphinate), sulfonyl (including sulfate, sulfonamido, sulfamoyl and sulfonate), and silyl groups, as well as ethers, alkylthios, carbonyls (including ketones, aldehydes, carboxylates, and esters), -CF₃, -CN and the like. Cycloalkyls can be substituted in the same manner.

The term "heteroalkyl", as used herein, refers to straight or branched chain, or cyclic carbon-containing radicals, or combinations thereof, containing at least one heteroatom. Suitable heteroatoms include, but are not limited to, O, N, Si, P, Se, B, and S, wherein the phosphorous and sulfur atoms are optionally oxidized, and the nitrogen heteroatom is optionally quaternized. Heteroalkyls can be substituted as defined above for alkyl groups.

The term "alkylthio" refers to an alkyl group, as defined above, having a sulfur radical attached thereto. In some embodiments, the "alkylthio" moiety is represented by one of -S-alkyl, -S-alkenyl, and -S-alkynyl. Representative alkylthio groups include methylthio, and ethylthio. The term "alkylthio" also encompasses cycloalkyl groups, alkene and cycloalkene groups, and alkyne groups. "Arylthio" refers to aryl or heteroaryl groups. Alkylthio groups can be substituted as defined above for alkyl groups.

The terms "alkenyl" and "alkynyl", refer to unsaturated aliphatic groups analogous in length and possible substitution to the alkyls described above, but that contain at least one double or triple bond respectively.

The terms "alkoxyl" or "alkoxy" as used herein refers to an alkyl group, as defined above, having an oxygen radical attached thereto. Representative alkoxyl groups include methoxy, ethoxy, propyloxy, and tert-butoxy. An "ether" is two hydrocarbons covalently linked by an oxygen. Accordingly, the substituent of an alkyl that renders that alkyl an ether is or resembles an alkoxyl, such as can be represented by one of -O-alkyl, -O-alkenyl, and -O-alkynyl. Aroxy can be represented by -O-aryl or O-heteroaryl, wherein aryl and heteroaryl are as defined below. The alkoxy and aroxy groups can be substituted as described above for alkyl.

The terms "amine" and "amino" are art-recognized and refer to both unsubstituted and substituted amines, e.g., a moiety that can be represented by the general formula: 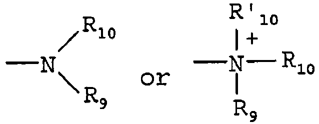 wherein R₉, R₁₀, and R'₁₀ each independently represent a hydrogen, an alkyl, an alkenyl, -(CH₂)ₘ-R₈ or R₉ and R₁₀ taken together with the N atom to which they are attached complete a heterocycle having from 4 to 8 atoms in the ring structure; R₈ represents an aryl, a cycloalkyl, a cycloalkenyl, a heterocycle or a polycycle; and m is zero or an integer in the range of 1 to 8. In some embodiments, only one of R₉ or R₁₀ can be a carbonyl, e.g., R₉, R₁₀ and the nitrogen together do not form an imide. In still other embodiments, the term "amine" does not encompass amides, e.g., wherein one of R₉ and R₁₀ represents a carbonyl. In additional embodiments, R₉ and R₁₀ (and optionally R'₁₀) each independently represent a hydrogen, an alkyl or cycloakly, an alkenyl or cycloalkenyl, or alkynyl. Thus, the term "alkylamine" as used herein means an amine group, as defined above, having a substituted (as described above for alkyl) or unsubstituted alkyl attached thereto, i.e., at least one of R₉ and R₁₀ is an alkyl group.

The term "amido" is art-recognized as an amino-substituted carbonyl and includes a moiety that can be represented by the general formula: 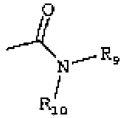 wherein R₉ and R₁₀ are as defined above.

"Aryl", as used herein, refers to C₅-C₁₀-membered aromatic, heterocyclic, fused aromatic, fused heterocyclic, biaromatic, or bihetereocyclic ring systems. Broadly defined, "aryl", as used herein, includes 5-, 6-, 7-, 8-, 9-, and 10-membered single-ring aromatic groups that may include from zero to four heteroatoms, for example, benzene, pyrrole, furan, thiophene, imidazole, oxazole, thiazole, triazole, pyrazole, pyridine, pyrazine, pyridazine and pyrimidine, and the like. Those aryl groups having heteroatoms in the ring structure may also be referred to as "aryl heterocycles" or "heteroaromatics". The aromatic ring can be substituted at one or more ring positions with one or more substituents including, but not limited to, halogen, azide, alkyl, aralkyl, alkenyl, alkynyl, cycloalkyl, hydroxyl, alkoxyl, amino (or quaternized amino), nitro, sulfhydryl, imino, amido, phosphonate, phosphinate, carbonyl, carboxyl, silyl, ether, alkylthio, sulfonyl, sulfonamido, ketone, aldehyde, ester, heterocyclyl, aromatic or heteroaromatic moieties, -CF₃, - CN; and combinations thereof.

The term "aryl" also includes polycyclic ring systems having two or more cyclic rings in which two or more carbons are common to two adjoining rings (i.e., "fused rings") wherein at least one of the rings is aromatic, e.g., the other cyclic ring or rings can be cycloalkyls, cycloalkenyls, cycloalkynyls, aryls and/or heterocycles. Examples of heterocyclic rings include, but are not limited to, benzimidazolyl, benzofuranyl, benzothiofuranyl, benzothiophenyl, benzoxazolyl, benzoxazolinyl, benzthiazolyl, benztriazolyl, benztetrazolyl, benzisoxazolyl, benzisothiazolyl, benzimidazolinyl, carbazolyl, 4aH carbazolyl, carbolinyl, chromanyl, chromenyl, cinnolinyl, decahydroquinolinyl, 2*H*,6*H*-1,5,2-dithiazinyl, dihydrofuro[2,3 b]tetrahydrofuran, furanyl, furazanyl, imidazolidinyl, imidazolinyl, imidazolyl, 1*H*-indazolyl, indolenyl, indolinyl, indolizinyl, indolyl, 3*H*-indolyl, isatinoyl, isobenzofuranyl, isochromanyl, isoindazolyl, isoindolinyl, isoindolyl, isoquinolinyl, isothiazolyl, isoxazolyl, methylenedioxyphenyl, morpholinyl, naphthyridinyl, octahydroisoquinolinyl, oxadiazolyl, 1,2,3-oxadiazolyl, 1,2,4-oxadiazolyl, 1,2,5-oxadiazolyl, 1,3,4-oxadiazolyl, oxazolidinyl, oxazolyl, oxindolyl, pyrimidinyl, phenanthridinyl, phenanthrolinyl, phenazinyl, phenothiazinyl, phenoxathinyl, phenoxazinyl, phthalazinyl, piperazinyl, piperidinyl, piperidonyl, 4-piperidonyl, piperonyl, pteridinyl, purinyl, pyranyl, pyrazinyl, pyrazolidinyl, pyrazolinyl, pyrazolyl, pyridazinyl, pyridooxazole, pyridoimidazole, pyridothiazole, pyridinyl, pyridyl, pyrimidinyl, pyrrolidinyl, pyrrolinyl, 2H-pyrrolyl, pyrrolyl, quinazolinyl, quinolinyl, 4*H-*quinolizinyl, quinoxalinyl, quinuclidinyl, tetrahydrofuranyl, tetrahydroisoquinolinyl, tetrahydroquinolinyl, tetrazolyl, 6*H*-1,2,5-thiadiazinyl, 1,2,3-thiadiazolyl, 1,2,4-thiadiazolyl, 1,2,5-thiadiazolyl, 1,3,4-thiadiazolyl, thianthrenyl, thiazolyl, thienyl, thienothiazolyl, thienooxazolyl, thienoimidazolyl, thiophenyl and xanthenyl. One or more of the rings can be substituted as defined above for "aryl".

The term "aralkyl", as used herein, refers to an alkyl group substituted with an aryl group (e.g., an aromatic or heteroaromatic group).

The term "carbocycle", as used herein, refers to an aromatic or non-aromatic ring in which each atom of the ring is carbon.

"Heterocycle" or "heterocyclic", as used herein, refers to a cyclic radical attached via a ring carbon or nitrogen of a monocyclic or bicyclic ring containing 3-10 ring atoms, and preferably from 5-6 ring atoms, consisting of carbon and one to four heteroatoms each selected from the group consisting of non-peroxide oxygen, sulfur, and N(Y) wherein Y is absent or is H, O, (C₁-C₁₀) alkyl, phenyl or benzyl, and optionally containing 1-3 double bonds and optionally substituted with one or more substituents. Examples of heterocyclic ring include, but are not limited to, benzimidazolyl, benzofuranyl, benzothiofuranyl, benzothiophenyl, benzoxazolyl, benzoxazolinyl, benzthiazolyl, benztriazolyl, benztetrazolyl, benzisoxazolyl, benzisothiazolyl, benzimidazolinyl, carbazolyl, 4a*H-*carbazolyl, carbolinyl, chromanyl, chromenyl, cinnolinyl, decahydroquinolinyl, 2*H*,6*H*-1,5,2-dithiazinyl, dihydrofuro[2,3-*b*]tetrahydrofuran, furanyl, furazanyl, imidazolidinyl, imidazolinyl, imidazolyl, 1*H*-indazolyl, indolenyl, indolinyl, indolizinyl, indolyl, 3H-indolyl, isatinoyl, isobenzofuranyl, isochromanyl, isoindazolyl, isoindolinyl, isoindolyl, isoquinolinyl, isothiazolyl, isoxazolyl, methylenedioxyphenyl, morpholinyl, naphthyridinyl, octahydroisoquinolinyl, oxadiazolyl, 1,2,3-oxadiazolyl, 1,2,4-oxadiazolyl, 1,2,5-oxadiazolyl, 1,3,4-oxadiazolyl, oxazolidinyl, oxazolyl, oxepanyl, oxetanyl, oxindolyl, pyrimidinyl, phenanthridinyl, phenanthrolinyl, phenazinyl, phenothiazinyl, phenoxathinyl, phenoxazinyl, phthalazinyl, piperazinyl, piperidinyl, piperidonyl, 4-piperidonyl, piperonyl, pteridinyl, purinyl, pyranyl, pyrazinyl, pyrazolidinyl, pyrazolinyl, pyrazolyl, pyridazinyl, pyridooxazole, pyridoimidazole, pyridothiazole, pyridinyl, pyridyl, pyrimidinyl, pyrrolidinyl, pyrrolinyl, 2H-pyrrolyl, pyrrolyl, quinazolinyl, quinolinyl, 4*H-*quinolizinyl, quinoxalinyl, quinuclidinyl, tetrahydrofuranyl, tetrahydroisoquinolinyl, tetrahydropyranyl, tetrahydroquinolinyl, tetrazolyl, 6*H*-1,2,5-thiadiazinyl, 1,2,3-thiadiazolyl, 1,2,4-thiadiazolyl, 1,2,5-thiadiazolyl, 1,3,4-thiadiazolyl, thianthrenyl, thiazolyl, thienyl, thienothiazolyl, thienooxazolyl, thienoimidazolyl, thiophenyl and xanthenyl. Heterocyclic groups can optionally be substituted with one or more substituents at one or more positions as defined above for alkyl and aryl, for example, halogen, alkyl, aralkyl, alkenyl, alkynyl, cycloalkyl, hydroxyl, amino, nitro, sulfhydryl, imino, amido, phosphate, phosphonate, phosphinate, carbonyl, carboxyl, silyl, ether, alkylthio, sulfonyl, ketone, aldehyde, ester, a heterocyclyl, an aromatic or heteroaromatic moiety, -CF3, and -CN.

The term "carbonyl" is art-recognized and includes such moieties as can be represented by the general formula: 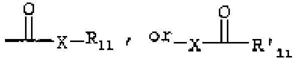 wherein X is a bond or represents an oxygen or a sulfur, and R₁₁ represents a hydrogen, an alkyl, a cycloalkyl, an alkenyl, an cycloalkenyl, or an alkynyl, R'₁₁ represents a hydrogen, an alkyl, a cycloalkyl, an alkenyl, an cycloalkenyl, or an alkynyl. Where X is an oxygen and R₁₁ or R'₁₁ is not hydrogen, the formula represents an "ester". Where X is an oxygen and R₁₁ is as defined above, the moiety is referred to herein as a carboxyl group, and particularly when R₁₁ is a hydrogen, the formula represents a "carboxylic acid". Where X is an oxygen and R'₁₁ is hydrogen, the formula represents a "formate". In general, where the oxygen atom of the above formula is replaced by sulfur, the formula represents a "thiocarbonyl" group. Where X is a sulfur and R₁₁ or R'₁₁ is not hydrogen, the formula represents a "thioester." Where X is a sulfur and R₁₁ is hydrogen, the formula represents a "thiocarboxylic acid." Where X is a sulfur and R'₁₁ is hydrogen, the formula represents a "thioformate." On the other hand, where X is a bond, and R₁₁ is not hydrogen, the above formula represents a "ketone" group. Where X is a bond, and R₁₁ is hydrogen, the above formula represents an "aldehyde" group.

The term "monoester" as used herein refers to an analogue of a dicarboxylic acid wherein one of the carboxylic acids is functionalized as an ester and the other carboxylic acid is a free carboxylic acid or salt of a carboxylic acid. Examples of monoesters include, but are not limited to, to monoesters of succinic acid, glutaric acid, adipic acid, suberic acid, sebacic acid, azelaic acid, oxalic and maleic acid.

The term "heteroatom" as used herein means an atom of any element other than carbon or hydrogen. Examples of heteroatoms are boron, nitrogen, oxygen, phosphorus, sulfur and selenium. Other heteroatoms include silicon and arsenic.

As used herein, the term "nitro" means -NO₂; the term "halogen" designates -F, -Cl, -Br or -I; the term "sulfhydryl" means -SH; the term "hydroxyl" means -OH; and the term "sulfonyl" means -SO₂-.

The term "substituted" as used herein, refers to all permissible substituents of the compounds described herein. In the broadest sense, the permissible substituents include acyclic and cyclic, branched and unbranched, carbocyclic and heterocyclic, aromatic and nonaromatic substituents of organic compounds. Illustrative substituents include, but are not limited to, halogens, hydroxyl groups, or any other organic groupings containing any number of carbon atoms, preferably 1-14 carbon atoms, and optionally include one or more heteroatoms such as oxygen, sulfur, or nitrogen grouping in linear, branched, or cyclic structural formats. Representative substituents include alkyl, substituted alkyl, alkenyl, substituted alkenyl, alkynyl, substituted alkynyl, phenyl, substituted phenyl, aryl, substituted aryl, heteroaryl, substituted heteroaryl, halo, hydroxyl, alkoxy, substituted alkoxy, phenoxy, substituted phenoxy, aroxy, substituted aroxy, alkylthio, substituted alkylthio, phenylthio, substituted phenylthio, arylthio, substituted arylthio, cyano, isocyano, substituted isocyano, carbonyl, substituted carbonyl, carboxyl, substituted carboxyl, amino, substituted amino, amido, substituted amido, sulfonyl, substituted sulfonyl, sulfonic acid, phosphoryl, substituted phosphoryl, phosphonyl, substituted phosphonyl, polyaryl, substituted polyaryl, C₃-C₂₀ cyclic, substituted C₃-C₂₀ cyclic, heterocyclic, substituted heterocyclic, aminoacid, peptide, and polypeptide groups.

Heteroatoms such as nitrogen may have hydrogen substituents and/or any permissible substituents of organic compounds described herein which satisfy the valences of the heteroatoms. It is understood that "substitution" or "substituted" includes the implicit proviso that such substitution is in accordance with permitted valence of the substituted atom and the substituent, and that the substitution results in a stable compound, *i.e.* a compound that does not spontaneously undergo transformation such as by rearrangement, cyclization, elimination, etc.

In a broad aspect, the permissible substituents include acyclic and cyclic, branched and unbranched, carbocyclic and heterocyclic, aromatic and nonaromatic substituents of organic compounds. Illustrative substituents include, for example, those described herein. The permissible substituents can be one or more and the same or different for appropriate organic compounds. The heteroatoms such as nitrogen may have hydrogen substituents and/or any permissible substituents of organic compounds described herein which satisfy the valencies of the heteroatoms.

In various embodiments, the substituent is selected from alkoxy, aryloxy, alkyl, alkenyl, alkynyl, amide, amino, aryl, arylalkyl, carbamate, carboxy, cyano, cycloalkyl, ester, ether, formyl, halogen, haloalkyl, heteroaryl, heterocyclyl, hydroxyl, ketone, nitro, phosphate, sulfide, sulfinyl, sulfonyl, sulfonic acid, sulfonamide, and thioketone, each of which optionally is substituted with one or more suitable substituents. In some embodiments, the substituent is selected from alkoxy, aryloxy, alkyl, alkenyl, alkynyl, amide, amino, aryl, arylalkyl, carbamate, carboxy, cycloalkyl, ester, ether, formyl, haloalkyl, heteroaryl, heterocyclyl, ketone, phosphate, sulfide, sulfinyl, sulfonyl, sulfonic acid, sulfonamide, and thioketone, wherein each of the alkoxy, aryloxy, alkyl, alkenyl, alkynyl, amide, amino, aryl, arylalkyl, carbamate, carboxy, cycloalkyl, ester, ether, formyl, haloalkyl, heteroaryl, heterocyclyl, ketone, phosphate, sulfide, sulfinyl, sulfonyl, sulfonic acid, sulfonamide, and thioketone can be further substituted with one or more suitable substituents.

Examples of substituents include, but are not limited to, halogen, azide, alkyl, aralkyl, alkenyl, alkynyl, cycloalkyl, hydroxyl, alkoxyl, amino, nitro, sulfhydryl, imino, amido, phosphonate, phosphinate, carbonyl, carboxyl, silyl, ether, alkylthio, sulfonyl, sulfonamido, ketone, aldehyde, thioketone, ester, heterocyclyl, -CN, aryl, aryloxy, perhaloalkoxy, aralkoxy, heteroaryl, heteroaryloxy, heteroarylalkyl, heteroaralkoxy, azido, alkylthio, oxo, acylalkyl, carboxy esters, carboxamido, acyloxy, aminoalkyl, alkylaminoaryl, alkylaryl, alkylaminoalkyl, alkoxyaryl, arylamino, aralkylamino, alkylsulfonyl, carboxamidoalkylaryl, carboxamidoaryl, hydroxyalkyl, haloalkyl, alkylaminoalkylcarboxy, aminocarboxamidoalkyl, cyano, alkoxyalkyl, perhaloalkyl, arylalkyloxyalkyl, and the like. In some embodiments, the substituent is selected from cyano, halogen, hydroxyl, and nitro.

As used herein, an "analog", or "analogue" of a chemical compound is a compound that, by way of example, resembles another in structure but is not necessarily an isomer (e.g., 5-fluorouracil is an analog of thymine).

As used herein, a "derivative" of a compound refers to any compound having the same or a similar core structure to the compound but having at least one structural difference, including substituting, deleting, and/or adding one or more atoms or functional groups. The term "derivative" does not mean that the derivative is synthesized from the parent compound either as a starting material or intermediate, although this may be the case. The term "derivative" can include replacement of H by an alkyl, acyl, or amino group or a substituent described above. Derivatives can include compounds in which carboxyl groups in the parent compound have been derivatized to form salts, methyl and ethyl esters or other types of esters or hydrazides. Derivatives can include compounds in which hydroxyl groups in the parent compound have been derivatized to form O-acyl or O-alkyl derivatives. Derivatives can include compounds in which a hydrogen bond donating group in the parent compound is replaced with another hydrogen bond donating group such as OH, NH, or SH. Derivatives can include replacing a hydrogen bond acceptor group in the parent compound with another hydrogen bond acceptor group such as esters, ethers, ketones, carbonates, tertiary amines, imine, thiones, sulfones, tertiary amides, and sulfides.

Unless otherwise indicated, the term "polymer" includes both homopolymers and copolymers (e.g., polymers of two or more different monomers) and oligomers. Similarly, unless otherwise indicated, the use of a term designating a polymer class is intended to include homopolymers, copolymers and graft copolymers.

The term "molecular weight", as used herein, generally refers to the mass or average mass of a material. If a polymer or oligomer, the molecular weight can refer to the relative average chain length or relative chain mass of the bulk polymer. In practice, the molecular weight of polymers and oligomers can be estimated or characterized in various ways including gel permeation chromatography (GPC) or capillary viscometry. GPC molecular weights are reported as the weight-average molecular weight (Mw) as opposed to the number-average molecular weight (Mn). Capillary viscometry provides estimates of molecular weight as the inherent viscosity determined from a dilute polymer solution using a particular set of concentration, temperature, and solvent conditions.

The term "small molecule", as used herein, generally refers to an organic molecule that is less than 2000 g/mol in molecular weight, less than 1500 g/mol, less than 1000 g/mol, less than 800 g/mol, or less than 500 g/mol. Small molecules are non-polymeric and/or non-oligomeric.

The term "hydrophilic", as used herein, refers to substances that have strongly polar groups that readily interact with water. Hydrophilic polymers can include acrylic acid homo- and co-polymers such as acrylamide, and maleic anhydride polymers and copolymers; aminefunctional polymers such as allylamine, ethyleneimine, oxazoline, and other polymers containing amine groups in their main- or side-chains. The term hydrophilic, when used to refer to a polymer or oligomer, can mean a polymer or oligomer having a relative energy difference (RED = Rₐ/R₀, where Rₐ = Polymer/Solvent HSP Distance, R₀ = Polymer Solubility Sphere Radius) of equal or less than 1 with respect to water in Hansen solubility space at 25°C. As used herein, with reference to a sidechain or substituent, the term hydrophilic is used to characterize the sidechain or substituent without consideration for what the sidechain or substituent is attached to. For example, when the specification refers to a polymer backbone having a hydrophilic sidechain attached thereto, this means that the sidechain, when not bonded to the polymer backbone to which the sidechain is attached and when the broken bond is replaced with a hydrogen to satisfy the valence, the sidechain is hydrophilic as that term is used herein even if the overall polymer (polymer backbone having the hydrophilic sidechain attached thereto) is not.

The term "hydrophobic", as used herein, refers to substances that lack an affinity for water; tending to repel and not absorb water as well as to not readily dissolve in or mix with water. The term hydrophobic, when used to refer to a polymer or oligomer, can mean a polymer or oligomer having a relative energy difference (RED = Rₐ/R₀, where Rₐ = Polymer/Solvent HSP Distance, R₀ = Polymer Solubility Sphere Radius) greater than 1 with respect to water in Hansen solubility space at 25°C. As used herein, with reference to a sidechain or substituent, the term hydrophobic is used to characterize the sidechain or substituent without consideration for what the sidechain or substituent is attached to. For example, when the specification refers to a polymer backbone having a hydrophobic sidechain attached thereto, this means that the sidechain, when not bonded to the polymer backbone to which the sidechain is attached and when the broken bond is replaced with a hydrogen to satisfy the valence, the sidechain is hydrophobic as that term is used herein even if the overall polymer (polymer backbone having the hydrophobic sidechain attached thereto) is not.

The term "amphiphilic", as used herein, refers to a molecule combining hydrophilic and lipophilic (hydrophobic) properties. "Amphiphilic material" as used herein refers to a material containing a hydrophobic or more hydrophobic oligomer or polymer (e.g., biodegradable oligomer or polymer) and a hydrophilic or more hydrophilic oligomer or polymer. The term amphiphilic can refer to a polymer or oligomer having one or more hydrophobic oligomer segments and one or more hydrophilic oligomer segments as those terms are defined above.

The term "fouling resistant", as used herein, refers to a material or a surface that effectively prevents accumulation of unwanted materials such as biofouling and marine fouling organisms without necessarily killing them.

The term "antifouling", as used herein, refers to a material or a surface that effectively prevents accumulation of unwanted materials such as biofouling and marine fouling organisms through the action of killing them.

The term "foul release", as used herein, refers to a surface that effectively releases accumulated materials such as biofouling and marine fouling organisms by a shear force or agitation or cleaning.

The term "zwitterionic", as used herein, refers to a compound, substituent, or functional group that, although it has a net formal charge of zero, has two atoms one of which has a net negative charge and one of which has a net positive charge at a neutral pH, at a pH of about 2 to10, about 3 to 9, or about 4 to 9, or about 5 to 8.5. When referring to a substituent or functional group, the term zwitterionic is used to refer to the net charges when the substituent or functional group is in its intended state in the final molecule.

The term "moiety", as used herein, refers to a part of a molecule that could also be found in other kinds of molecule in a way that such a part is distinctive enough to be called separately with a term like 'moiety'

The term "polyoxyalkylene" and "polyalkylene oxide", as used herein, can be interchangeably used, are equivalent to polyoxyalkene and polyalkene oxide, respectively, and refer to a polymer with its repeating unit being -(CnH2nO)- where n is an integer.

The term "Active Performance Ingredient(s) (APIs)", as used herein, refers to a molecule or combination of molecules that individually or collectively improves the antifouling or fouling release performance of a coating when added to the coating formulation. One example of API is a reactive polymeric amphiphile (SAP) which can be added to a resin system, including but not limited to silicone, epoxy or polyurethane, to improve fouling release performance. Another example of APIs is a blend of reactive polymeric amphiphile (SAP) and unreactive polymeric amphiphilic lubricants which can be added to a resin system, including but not limited to silicone, epoxy or polyurethane, to improve fouling release performance.

The term "Surface Active Polymers (SAPs)", as used herein, refers to an amphiphilic polymeric molecule having similar properties to a small molecule surfactant. SAPs have both hydrophobic part and hydrophilic part in one polymeric molecule. One example of SAPs is a polymeric architecture with a hydrophobic backbone (e.g. polysiloxane) with one or more hydrophilic sidechains (e.g. PEG) grafted from the backbone. Another example of SAPs is a block-co-polymer architecture comprising a hydrophobic segment and a hydrophilic segment. SAPs introduced into a binder or film forming system tend to spontaneously segregate from the binder to form a stratified film or coating and present themselves at the surface. The process is driven by phase separation due to mismatched compatibility or poor solubility in the binder, minimization of interfacial energy during solidification, buoyancy due to density difference, and combinations thereof. SAPs can thus be designed and used to impart new physical or chemical properties at the surface of a film or coating that the binder alone cannot provide.

The term "dynamic wetting", as used herein, refers to a property of a surface displaying dynamically changing wetting properties when exposed from one medium to another medium. One such example is the value of water contact angle changing from a steady value (e.g. the moment when a droplet of water is applied to a surface exposed to ambient air) to another steady value (e.g. the surface underneath the applied water droplet is now exposed to water) over a time period. The dynamic wetting property can sometimes be reversible (e.g. a surface initially exposed to water is later exposed to a different medium such as air or oil) or can have hysteresis or can be irreversible depending on the characteristics of the surface. The time scale of such dynamic wetting behavior may be observed within fractions of second, from 1 to 5 seconds, from 5 to 20 seconds, from 20 to 60 seconds, from 60 to 300 seconds, or over 300 seconds.

The term "biocidal group or biocidal moiety", as used herein, refers to either a tethered chemical functional group or a tethered chemical moiety known to have biocidal effect (kills organisms) if it was not tethered and freely exposed to organisms.

### Polyoxyalkylene Coupled Zwitterionic Moieties (POA-ZW)

Provided herein are unique polyoxyalkylene coupled zwitterionic moieties. The polyoxyalkylene coupled zwitterionic moieties can be incorporated directly into a coating resin or matrix, can be directly coated onto a substrate, or can be coupled with polymers or oligomers (surface active polymers or SAPs). Also provided are formulations and coatings containing the polyoxyalkylene zwitterionic moieties and compounds described above.

The polyoxyalkylene zwitterionic moiety can include: (i) a polyoxyalkylene chain having a first end and a second end opposite the first end; (ii) a reactive end group covalently attached to the first end, optionally using a linker; and (iii) a zwitterionic moiety covalently attached at the second end, optionally using a linker.

In some aspects, the zwitterionic moiety is covalently attached without a linker. However, in other aspects, the zwitterionic moiety is covalently attached via a linker selected from the group consisting of substituted and unsubstituted C₁-C₅ alkyl and heteroalkyl. In some aspects, the reactive end group is covalently attached without a linker. However, in other aspects, the reactive end group is covalently attached via a linker selected from the group consisting of substituted and unsubstituted C₁-C₅ alkyl and heteroalkyl.

In some aspects, the polyoxyalkylene chain is selected from the group consisting of poly(ethylene glycol), poly(propylene glycol), poly(ethylene glycol-*ran*-propylene glycol), poly(ethylene glycol*-block-*propylene glycol), poly(butylene glycol), co-polymers containing poly(butylene glycol), and a combination thereof.

In some aspects, the reactive end group is selected from a group that can undergo 1) addition cure chemistry, 2) condensation cure chemistry, 3) hydrosilylation chemistry, 4) epoxy chemistry, 5) urethane/urea chemistry, 6) amino crosslinking chemistry, 7) click chemistry. In additional aspects, the reactive end group can be selected from alkoxy, enoxy, oxime, primary amine, secondary amine, ethoxy silane, methoxy silane, acetoxy silane, vinyl groups, hydrides, epoxide groups, isocyanate groups, hydroxyl groups, and (meth)acrylate groups. In additional aspects, the reactive end group can be selected from a group that can adhere to a solid substrate including but not limited to a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

In some aspects, a polyoxyalkylene zwitterionic moiety is provided having a structure according to the following formula:

Rx₆-L₆-A₆-L'₆-Z₆.

In some aspects, a crosslinkable polyoxyalkylene zwitterionic moiety is provided having a structure according to the following formula:

Rx₆-L₆-A₆-L'₆-Z₆-Rx₇.

In the above formulas, each occurrence of Z₆ is a zwitterionic moiety; each occurrence of A₆ is a substituted or unsubstituted hydrophilic polyoxyalkylene; each occurrence of L₆ and L'₆ is independently none, a C₁-C₁₂ alkyl or heteroalkyl linker, or a C₁-C₅ alkyl or heteroalkyl linker; and each occurrence of Rx₆ and Rx₇ are independently reactive end groups which can be the same or different.

In some aspects, each occurrence A₆ is -(O(CH₂)ₒ)ₚ-, where o is an integer from 2 to 4; and p is an integer from 2 to 20. In some aspects, Rx₆ and Rx₇ are independently selected from the group consisting of alkoxy, enoxy, oxime, primary amine, secondary amine, ethoxy silane, methoxy silane, and acetoxy silane groups that are reactive for silicone condensation cure chemistry; vinyl, allyl groups that are reactive for platinum addition cure silicone chemistry; acrylates/methacrylates that can participate in free radical polymerization; epoxide groups reactive with epoxy chemistry; -NH₂ groups reactive with epoxy and polyurethane chemistry; and -NCO and -OH groups reactive with polyurethane chemistry.

In some aspects, the zwitterionic moiety (Z₆) is selected from the group consisting of phosphates, sulfonates or carboxylates. In some aspects, the zwitterionic moiety (Z₆) is selected from the group consisting of aminoalkyl phosphonic acids, aminoalkyl carboxylic acids, and aminoalkyl sulfonic acids. In some aspects, the zwitterionic moiety (Z₆) is selected from the group consisting of sulfobetaine, carboxybetaine, glycine betaine, trimethylamine *N*-oxide, and phosphoryl choline. In some aspects, the zwitterionic moiety (Z₆) comprises a terminal end that is positively charged. In some aspects, the zwitterionic moiety (Z₆) comprises a terminal end that is negatively charged.

### Polyoxyalkylene-zwitterionic sidechain functionalized organosiloxanes

While the polyoxyalkylene zwitterionic moieties can in some aspects be directly incorporated into a coating via a covalent bond at the reactive end group, in some aspects the polyoxyalkylene zwitterionic moieties are incorporated into a sidechain functionalized organosiloxane that can be used as a coating composition or can be incorporated into a coating composition as described elsewhere herein.

In some aspects, a polyoxyalkylene-zwitterionic sidechain functionalized organosiloxane is provided comprising: (i) an organosiloxane backbone; (ii) at least one sidechain that is a polyoxyalkylene chain having a tethered end covalently attached to the polysiloxane backbone and a free end opposite to the tethered end; (iii) a zwitterionic moiety covalently attached at the free end of the said polyoxyalkylene chain; and (iv) at least one sidechain comprising a reactive end group.

In some aspects, the organosiloxane backbone is linear. In some aspects, the organosiloxane backbone is branched. In some aspects, one or more of the polyoxyalkylene chain, the zwitterionic moiety, and the reactive end group are each covalently attached either to one another or to the organosiloxane backbone via a linker group which may be the same or different. In some aspects, the polyoxyalkylene-zwitterionic sidechain functionalized organosiloxane further includes one or more additional polyoxyalkylene chains that do not have the zwitterionic moiety covalently attached. In some aspects, the organosiloxane has another sidechain having a tethered end covalently attached to the polysiloxane backbone and a free end opposite to the tethered end where the free end comprise a reactive end group.

In some aspects, the polyoxyalkylene chains are selected from the group consisting of poly(ethylene glycol), poly(propylene glycol), poly(ethylene glycol-*ran*-propylene glycol), poly(ethylene glycol*-block-*propylene glycol), poly(butylene glycol), co-polymers containing poly(butylene glycol), and a combination thereof.

In some aspects, the organosiloxane backbone is nonreactive with silicone condensation cure chemistry, is nonreactive with platinum addition cure silicone chemistry, is nonreactive with epoxy cure chemistry, and/or is nonreactive with polyurethane chemistry.

In some aspects, the reactive end group is selected from a group that can undergo 1) addition cure chemistry, 2) condensation cure chemistry, 3) hydrosilylation chemistry, 4) epoxy chemistry, 5) urethane/urea chemistry. In additional aspects, the reactive end group can be selected from alkoxy, enoxy, oxime, primary amine, secondary amine, ethoxy silane, methoxy silane, acetoxy silane, vinyl groups, hydrides, epoxide groups, isocyanate groups, hydroxyl groups, and (meth)acrylate groups. In additional aspects, the reactive end group can be selected from a group that can adhere to a solid substrate including but not limited to a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

In some aspects, the linker group comprises a C₁-C₁₂ alkyl or heteroalkyl or a C₁-C₅ alkyl or heteroalkyl.

In some aspects, the reactive end group is covalently attached to the organosiloxane backbone via a second polyoxyalkylene chain, via an alkyl chain, via an organosiloxane chain, and/or via a heteroalkyl chain.

In some aspects, a polyoxyalkylene-zwitterionic sidechain functionalized organosiloxane is provided having a structure according to the following formula: 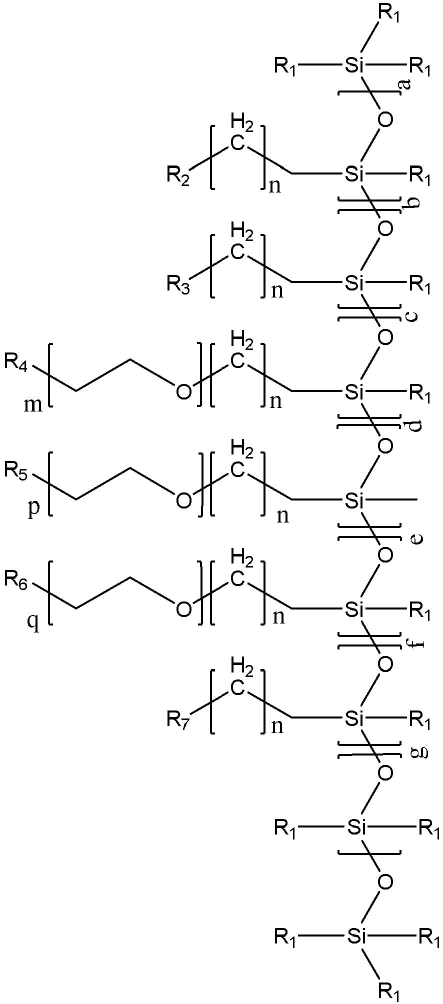 wherein each occurrence of R₁ is independently selected from the group consisting of substituted and unsubstituted C₁-C₅ alkyl and substituted and unsubstituted phenyl, and preferably where each occurrence of R₁ is independently selected from the group consisting of CH₃, -CH₂-CH₃, - CH₂-CH₂-CF₃, and phenyl; wherein each occurrence of R₂ is a curing group selected from the following list to achieve substantial reactivity to chemistry of coating matrix (alkoxy silane, oxime, acetoxy, acryloxy, -OH, -NH₂, -NR'H, -NCO, epoxy, and hydroxyl-terminated polyoxyalkylene) or chemistry of surface modification (-SH, -COOH, -PO(OH)2, -OP(OH)2, -alkyne, -N3, -alkene, - silane) ; wherein each occurrence of R₃ is a biocidal group or a zwitterionic group or a non-reactive polyoxyalkylene group; wherein each occurrence of R₄ is a functional group (NH₂, NR'H, COOH, OH); wherein each occurrence of R₆ can be a biocidal moiety; wherein each occurrence of R₇ is a polyorganosiloxane having a structure from any of -Si(CH₃)₃, -Si(CH₂CH₃)₃, [-Si(CH₃)₂-O-]ᵢ-Si (CH₃)₃ where i can be 1-10, R₇ can also be a short fluorinated moiety -CF₃, -(CF₂)ⱼ-CF₃, where j can be 1-10; where a is in integer from 0 to 20; where b is an integer from 1 to 20; where c is an integer from 0 to 20; where d is an integer from 1 to 20; where e is an integer from 0 to 20; where f is an integer from 0 to 20; where g is an integer from 0 to 50. In some aspects, b+c is greater than or equal to 1.
R₅ can be a zwitterionic moiety such as any zwitterionic moiety described herein. In some aspects, the zwitterionic moiety (R₅) is selected from the group consisting of aminoalkyl phosphonic acids, aminoalkyl carboxylic acids, and aminoalkyl sulfonic acids. In some aspects, the zwitterionic moiety (R₅) is selected from the group consisting of sulfobetaine, carboxybetaine, glycine betaine, trimethylamine N-oxide, and phosphoryl choline. In some aspects, the zwitterionic moiety (R₅) comprises a terminal end that is positively charged. In some aspects, the zwitterionic moiety (R₅) comprises a terminal end that is negatively charged.

In some aspects, a polyoxyalylene-zwitterionic sidechain functionalized organosiloxane is provided having a structure according to the following formula 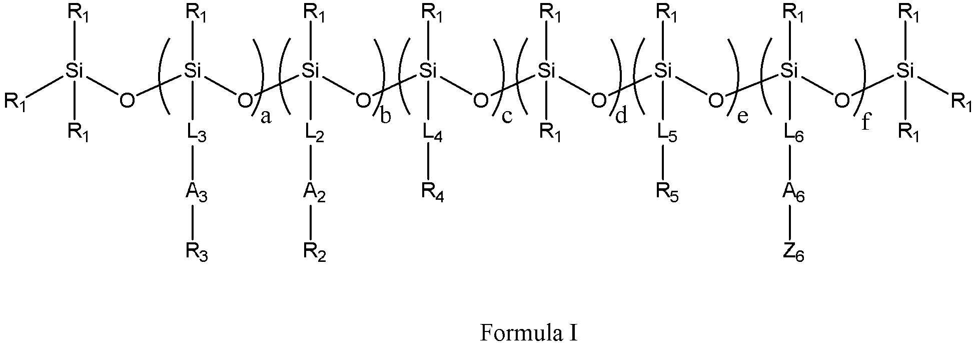 where each occurrence of R₁ is independently a substituted or unsubstituted C₁-C₅ alkyl, a substituted or unsubstituted C₁-C₅ heteroalkyl, or a substituted or unsubstituted phenyl; where each occurrence of R₂ is independently a substituted or unsubstituted C₁-C₅ alkyl, a substituted or unsubstituted C₁-C₅ heteroalkyl, or a hydroxyl; where each occurrence of R₃ is independently a reactive end group selected from the group consisting of alkoxy, enoxy, oxime, primary amine, secondary amine, ethoxy silane, methoxy silane, and acetoxy silane groups that are reactive for silicone condensation cure chemistry; vinyl groups that are reactive for platinum addition cure silicone chemistry; epoxide groups reactive with epoxy chemistry; -NH₂ groups reactive with epoxy and polyurethane chemistry; and -NCO and -OH groups reactive with polyurethane chemistry; where each occurrence of R₄ is independently a substituted or unsubstituted organosiloxane or a substituted or unsubstituted alkyl; where each occurrence of R₅ is independently a reactive end group selected from the group consisting of alkoxy, enoxy, oxime, primary amine, secondary amine, ethoxy silane, methoxy silane, and acetoxy silane groups that are reactive for silicone condensation cure chemistry; vinyl groups that are reactive for platinum addition cure silicone chemistry; epoxide groups reactive with epoxy chemistry; -NH₂ groups reactive with epoxy and polyurethane chemistry; and -NCO and -OH groups reactive with polyurethane chemistry; where each occurrence of L₂, L₃, L₄, L₅, and L₆ is independently a substituted or unsubstituted C₁-C₁₂ alkyl linker or a substituted or unsubstituted C₁-C₁₂ heteroalkyl linker; where each occurrence of A₂, A₃, and A₆ is independently a substituted or unsubstituted hydrophilic polyalkylene glycol; where each occurrence of Z₆ is a zwitterionic moiety; where a is in integer from 0 to 50, b is an integer from 0 to 50, c is an integer from 0 to 50, d is an integer from 0 to 100, e is an integer from 0 to 20, and f is an integer from 1 to 20.

In some aspects, each occurrence of A₂ is -(O(CH₂)ₒ)ₘ-, each occurrence of A₃ is - (O(CH₂)ₒ)ₙ-, and each occurrence of A₆ is -(O(CH₂)ₒ)ₚ-, where m is an integer from 2 to 20, n is an integer from 2 to 20, and o is an integer from 2 to 4; and p is an integer from 2 to 20.

In some aspects, each occurrence of L₂, L₃, L₄, L₅, and L₆ is independently a C₁-C₅ alkyl.

In some aspects, each occurrence of R₁ is independently CH₃, -CH₂-CH_{3,} -CH₂-CH₂-CF₃, or phenyl.

In some aspects, each occurrence of R₂ is independently methyl or hydroxyl.

In some aspects, each occurrence of R₃ is independently a methoxy silane, ethoxy silane, or acetoxy silane, -OH, -Si(OCH₂CH₃)₃, -Si(OCH₃)₃, or 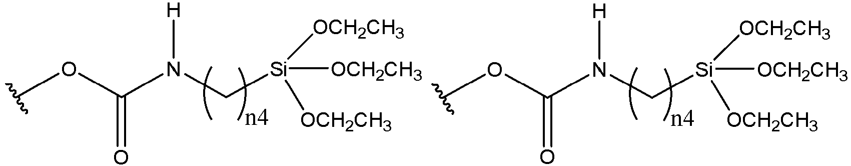 where n4 is an integer from 1 to 7.

In some aspects, each occurrence of R₄ is independently -Si(CH₃)₃, -Si(CH₂CH₃)₃, -[Si(CH₃)₂-O-]ₙ₃-Si(CH₃)₃, -CF₃, or -(CF₂)ₙ₃-CF₃, where n3 is an integer from 1 to 10.

In some aspects, each occurrence of R₅ is independently is independently a methoxy silane, ethoxy silane, or acetoxy silane.

In some aspects, Z₆ is nonreactive with silicone condensation cure chemistry, is nonreactive with platinum addition cure silicone chemistry, is nonreactive with epoxy cure chemistry, and/or is nonreactive with polyurethane chemistry; and wherein a+e is greater than or equal to 1.

In some aspects, Z₆ is selected from the group consisting of phosphates, sulfonates or carboxylates. In some aspects, Z₆ is selected from the group consisting of aminoalkyl phosphonic acids, aminoalkyl carboxylic acids, and aminoalkyl sulfonic acids. In some aspects, Z₆ is selected from the group consisting of sulfobetaine, carboxybetaine, glycine betaine, trimethylamine *N-*oxide, and phosphoryl choline.

In some aspects, a terminal end of Z₆ is positively charged. In some aspects, a terminal end of Z₆ is negatively charged.

### Methods of Making Polyoxyalkylene Zwitterionic Moieties

The general synthetic route to preparing polyoxyalkylene zwitterionic moieties includes coupling a zwitterionic compound or fragment thereof to a first end of a polyoxyalkylene chain, followed by coupling a reactive end group to a second end of the polyoxyalkylene chain. The methods can include a generalization of procedures described in, for example, Zhang et al. (J. Biomater. Sci. Polymer Edn, Vol19, No. 4, pp. 509-524 (2008))

### Methods of Making Polyoxyalkylene-zwitterionic Sidechain Functionalized Organosiloxanes

The general synthetic routes for zwitterionic sidechain functionalized organosiloxane include coupling precursor materials with a reactive end group to a corresponding reactive site present in an organosiloxane backbones. The methods can include synthesizing reactive monomers including a polyoxyalkylene chain having a zwitterionic functional group covalently attached at one end and a coupling group covalently attached at an opposite end, e.g. a vinyl group, an alkoxy group, or an amine group. Such coupling reactions comprise commonly used chemistry but not limited to addition chemistry such as hydrosylilation between a vinyl group and a hydride group, condensation reaction such as between an alkoxy group and a hydride, click chemistry such as between a vinyl group and a thiol group, amine coupling such as between a succinimide and an amine, Michael addition such as between an acrylate and an amine, epoxy formation such as between an epoxy and an amine, urethane formation such as between an isocyanate and a hydroxyl group, and urea formation such as between an isocyanate and an amine.

In some aspects, the zwitterionic sidechain functionalized organosiloxane can be prepared via platinum catalyzed hydrosilylation starting from a hydride resin and the appropriate alkene functionalized monomers (see examples). Additionally, many new catalysts and methods have been developed for the hydrosilylation of alkenes including other catalysts such as Fe, Co, and Ni catalysts. See, for example Du and Huang, ACS Catal. 7, 2, 1227-1243 (2017).

### Lubricating Liquids

The compositions and coatings can, in some aspects, include a lubricating liquids. In some aspects, the lubricating liquid is chemically and physically matched with the base resin in such a way that, when cured therewith to form a cured composition, the lubricating liquid is incorporated within the cured composition. Although other lubricants may be used in some instances, the lubricating liquid can include an amphiphilic lubricant, a partially fluorinated lubricant, or a combination thereof. The lubricating liquid can be a polysiloxane having one or more polyalkyllene glycol sidechains attached thereto. In some aspects, the lubricating liquid can be a polysiloxane having one or more partially or fully fluorinated alkyl sidechains attached thereto. In some aspects, the lubricating liquid has an average molecular weight of about 7000 g/mole to about 14000 g/mole. In some aspects, the use of the sidechain modified organosiloxanes increases miscibility of hydrophilic silicone lubricating liquids in non-silicone or low silicone binder systems (e.g. epoxies, urethanes), providing improved preparation and processing of the compositions and biofouling control in such binder systems. In some aspects, the lubricant includes a zwitterionic lubricant. Suitable lubricants can also include soy lecithin, sphingomyelin, and their derivatives.

In some aspects, the lubricating liquids can be derived from a polyoxyalkylene-zwitterionic sidechain modified polysiloxane wherein the side chains do not comprise a reactive group such that the resultant lubricating liquid is highly compatible with the coating compositions.

### Coating Compositions and Methods of Making Coating Compositions

A variety of coating compositions are provided.

In some aspects, a polymer composition is provided capable of curing on a substrate to form a surface that is resistant to biofouling, the polymer composition including: (a) a base resin composition comprising (i) one or more different polymeric precursors capable of curing to form a cured resin and (ii) a polyoxyalkylene-zwitterionic moiety described herein that comprises reactive end groups capable of reacting with the one or more different polymeric precursors; wherein, when the base resin composition is cured to form the cured resin, the reactive end groups in the polyoxyalkylene-zwitterionic moiety react with the one or more different polymeric precursors so that the polyoxyalkylene-zwitterionic moiety is integrated into the cured resin.

In some aspects, a polymer composition is provided capable of curing on a substrate to form a surface that is resistant to biofouling, the polymer composition including:(a) a base resin composition containing (i) one or more different polymeric precursors capable of curing to form a cured resin and (ii) a poloxyalkylene-zwitterionic sidechain functionalized organosiloxane described herein that has reactive end groups capable of reacting with the one or more different polymeric precursors, and (b) an (optional) lubricating liquid. This can allow the reactive end groups in the zwitterionic sidechain functionalized organosiloxane to react with the one or more different polymeric precursors so that the polypxyalkylene-zwitterionic sidechain functionalized organosiloxane is integrated into the cured resin. The polyoxyalkylene-zwitterionic sidechains in the zwitterionic sidechain functionalized organosiloxane can then stratify to the surface and/or can present free polyoxyalkylene-zwitterions at the surface that present a dynamic wetting behavior at the surface. Such dynamic wetting behavior can include a decrease in a water contact angle for the surface when measured over the first two minutes of exposing the surface to water. Not wishing to be bound by any particular theory, it is believed that the zwitterionic group can be brought further into the water phase at the coating/water interface by partitioning of polyoxyalkylene chain acting like a bridge.

The base resin composition can include polymeric precursors for a variety of compatible resins. For example, in some aspects the one or more different polymeric precursors comprises acrylic precursors; and the reactive end groups are reactive with acrylic resins. In some aspects, the one or more different polymeric precursors comprises condensation curable silicone precursors; and the reactive end groups are reactive with condensation cure silicon resins. In some aspects, the one or more different polymeric precursors comprises addition curable silicone precursors; and the reactive end groups are reactive with addition cure silicon resins. In some aspects, the one or more different polymeric precursors comprises epoxide precursors; and the reactive end groups are reactive with epoxy resins. In some aspects, the one or more different polymeric precursors comprises polyurethane precursors; and the reactive end groups are reactive with urethane resins.

The compositions can be prepared by combining and mixing the various components as a one-part or as a two-part coating resin, which can be determined by the nature of the coating compositions. Mixing and or agitation can be applied to ensure a suitable level of mixing. The compositions can then be applied to create coated articles as described below.

### Coated Articles and Methods of Coating Articles

The compound and coating compositions can be used to coat substrates in a variety of articles. Articles are therefore provided including a substrate and a fouling-resistant coating on a surface of the substrate, wherein the fouling-resistant coating comprises a plurality of polyoxyalkylene zwitterionic moieties. In some aspects, the substrate is functionalized with reactive groups such that the reactive end groups in the polyoxyalkylene zwitterionic moiety or in the polyoxyalkylene-zwitterionic sidechain functionalized organosiloxane are capable of binding directly to the substrate. In other aspects, a coating composition described herein is applied to the substrate and cured or dried to create the fouling-resistant coating. A lubricating liquid can further be provided, either in or with the polymer composition or applied to the surface after curing. In either case, in some aspects, the lubricating liquid is chemically and physically matched with the fouling-resistant coating in such a way the lubricating liquid is incorporated into the fouling-resistant coating.

The coatings can be applied to a variety of substrates, including a polymer, a metal, a sapphire, a glass, a carbon, a ceramic, or a composite thereof. This allows the coatings to be used in a wide range of applications. For example, the articles can include a ship, boat, or other marine vessel; an unmanned underwater vehicle; an aquaculture netting; a sensor; a seismic cable; or other article intended for exposure to an aqueous or marine environment. The articles can also include a drum, vat, or tank; a pipe or conduit; a membrane; or other article intended for exposure to water or aqueous systems, including aqueous waste handling systems. The articles can also include a catheter, stent, or other implantable medical device; a surgical tool; a bag or a container; or other article or surface intended for exposure to blood, bodily flood, or potential pathogens.

Coated articles can be prepared by applying the coating compositions in a variety of ways generally known in the art. Such methods can include dipping, casting, spraying, brushing, and the like to achieve a coating of sufficient thickness for the intended application. The coatings can be cured or dried, and if needed lubricating liquid can be subsequently applied if not already a part of the coating composition.

### EXAMPLES

Now having described the embodiments of the present disclosure, in general, the following Examples describe some additional embodiments of the present disclosure. While embodiments of the present disclosure are described in connection with the following examples and the corresponding text and figures, there is no intent to limit embodiments of the present disclosure to this description. On the contrary, the intent is to cover all alternatives, modifications, and equivalents included within the spirit and scope of embodiments of the present disclosure.

### Raw materials used

The raw materials used in the examples, unless otherwise specified, were obtained from the sources listed in the tables below.

| Chemical Name | Commercial ID | Manufacturer | CAS Number | Viscosity (cSt) | Molecular Weight (g/mol) | Specific Gravity |
|---|---|---|---|---|---|---|
| Polydimethylsiloxane-co-methylhydrosiloxane (Hydride resin) | | | | | | |
| Trimethylsilyl terminated methyl hydrogen silicone fluid | SiSiB^{®} HF2020 | SiSiB Silicones | 63148-57-2/9004-73-3 | 16-24 | N/A | 0.990-0.998 |
| Hydride terminated methylhydrosiloxane dimethylsiloxane copolymer | SiSiB^{®} HF2060 | SiSiB Silicones | 69013-23-6 | N/A | N/A | N/A |
| Hydride terminated methylhydrosiloxane dimethylsiloxane copolymer | SiSiB^{®} HF2068 | SiSiB Silicones | 115487-49-5 | N/A | N/A | N/A |
| Trimethylsilyl terminated methylhydrosiloxane dimeethylsiloxane copolymer | SiSiB^{®} HF2050 | SiSiB Silicones | 68037-59-2 | N/A | N/A | N/A |
| Trimethyl or hydrogen terminated dimethyl diphenyl polysiloxane copolymer | SiSiB^{®} HF2082 | SiSiB Silicones | N/A | N/A | N/A | N/A |
| (25-35% methylhydrosiloxane)-dimethylsiloxane copolymer, trimethylsiloxane terminated | HMS-301 | Gelest | 68037-59-2 | 25-35 | 1,900 - 2,000 | 0.98 |
| Polymethylhydrosiloxane, trimethylsilyl terminated | HMS-992 | Gelest | 63148-57-2 | 20-35 | 1,800 - 2,100 | 0.99 |
| (25-35% methylhydrosiloxane)-dimethylsiloxane copolymer, trimethylsiloxane terminated | HMS-301 | Gelest | 68037-59-2 | 25-35 | 1900-2000 | 0.98 |
| (45-55% methylhydrosiloxane)-dimethylsiloxane copolymer, trimethylsiloxane terminated | HMS-501 | Gelest | 68037-59-2 | 10-15 | 900 - 1,200 | 0.96 |
| Silanol terminated polydimethylsiloxane | DMS-S15 | Gelest | 70131-67-8 | 45-85 | 2,000-3,500 | 0.96 |

| Modular Side Chain Groups | | | | | | |
|---|---|---|---|---|---|---|
| Polyalkylene glycol monoallyl ether | Polyglykol A 400 | Clariant | 27274-31-3 | ~35 | 400 | 1.09 |
| Polyalkylene glycol monoallyl ether | Polyglykol A 500 | Clariant | 27274-31-3 | ~58 | 500 | 1.09 |
| Polyalkylene glycol monoallyl ether, methyl terminated | Polyglykol AM 450 | Clariant | 27252-80-8 | 18-20 | ~450 | 1.052 |
| Polyalkylene glycol monoallyl ether, methyl terminated | Polyglykol AM 350 | Clariant | 27252-80-8 | 9-10 | ~320 | 1.03 |
| Allyloxy(polyethylene oxide) (8-12 EO) | ENEA0260 | Gelest | 27274-31-3 | N/A | ~480 | 1.089 |
| Allyloxy(polyethylene oxide), methyl ether (6-8 EO) | ENEA0360 | Gelest | 27252-80-8 | N/A | ~350 | 1.03 |
| Allyloxy(polyethylene oxide) (1-4 EO) | ENEA0253 | Gelest | 27274-31-3 | N/A | ~200 | 1.004 |
| Monovinyl terminated polydimethylsiloxane, asymmetric | MCR-V21 | Gelest | 68951-99-5 | 80-120 | 5,500 - 6,500 | 0.97 |
| Monovinyl functional polydimethylsiloxane, symmetric | MCS-V212 | Gelest | 67762-94-1 | 16-24 | 1,200-1,400 | 0.97 |
| Allyltrimethylsilane | SIA0555.0 | Gelest | 762-72-1 | N/A | 114.26 | 0.7193 |
| (Perfluorodecyl)ethylene | 019129 | Oakwood Chemical | 30389-25-4 | N/A | 546 | 1.71 |
| 1-Hexene | 320323 | Sigma-Aldrich | 592-41-6 | N/A | 84 | 0.678 |
| Allyltriethoxysilane | SIA0525.0 | Gelest | 2550-04-1 | N/A | 204.34 | 0.903 |
| N-butyldimethylamine | D1506 | TCI America | 927-62-8 | N/A | 101.19 | 0.72 |
| Triethylamine | T0886 | Sigma-Aldrich | 121-44-8 | N/A | 101.19 | 0.726 |
| Trimethylamine | TM CP350 | AirGas | 75-50-3 | N/A | 59.1103 | N/A |
| (N,N'-Dimethylaminopropyl)triethoxysilane | AB336017 | ABCR | 43108-00-5 | N/A | 249.42 | N/A |
| (N,N'-Dimethylaminopropyl)trimethoxysilane | 539287 | Sigma-Aldrich | 2350-86-1 | N/A | 207.34 | 0.948 |
| N,N'-Dimethylallylamine | AC407980050 | Fisher Scientific | 2155-94-4 | N/A | 85.15 | 0.741 |

| Solvent | | | | | | |
|---|---|---|---|---|---|---|
| Anhydrous Toluene | TX0732-6 | Merck | 108-88-3 | N/A | 92 | 0.867 |
| Xylene | 214736 | Sigma-Aldrich | 1330-20-7 | N/A | 106 | 0.86 |
| Anhydrous Dimethylformamide | DX1727-6 | Merck | 68-12-2 | N/A | 73 | 0.94 |
| Anhydrous Acetonitrile | AX0151-6 | Merck | 75-05-8 | N/A | 41 | 0.786 |
| Anhydrous Tetrahydrofuran | 137170 | Beantown Chemicals | 109-99-9 | N/A | 72 | 0.889 |

| Catalyst | | | | | | |
|---|---|---|---|---|---|---|
| Platinum-divinyltetramethyldisiloxane complex (low color) | SIP6831.2LC | Gelest | 68478-92-2 | N/A | 474.68 | 0.8852 |
| Dibutyltin dilaurate | 291234 | Sigma-Aldrich | 77-58-7 | N/A | 631.56 | 1.066 |

| Chemical Name | Commercial ID | Manufacturer | CAS Number | Viscosity (cSt) | Molecular Weight (g/mol) | Specific Gravity |
|---|---|---|---|---|---|---|
| Binder | | | | | | |
| Silanol terminated polydimethylsiloxane | DMS-S45 | Gelest | 70131-67-8 | 50,000 | 110,000 | 0.98 |
| Silanol terminated polydimethylsiloxane | DMS-S35 | Gelest | 70131-67-8 | 5,000 | 49,000 | 0.98 |
| Silanol terminated polydimethylsiloxane | DMS-S31 | Gelest | 70131-67-8 | 1,000 | 26,000 | 0.98 |
| Silanol terminated polydimethylsiloxane | DMS-S27 | Gelest | 70131-67-8 | 700-800 | 18,000 | 0.97 |
| Silanol terminated polydimethylsiloxane | DMS-S15 | Gelest | 70131-67-8 | 45-85 | 2,000-3,500 | 0.96 |

| Filler | | | | | | |
|---|---|---|---|---|---|---|
| C.I. Pigment Black 28 * CI Constitution #77428 * CPMA # 13-38-9 | Black 30C965 | Shepherd | 68186-91-4 | N/A | N/A | 5.4 |
| 8086 Rutile titanium dioxide pigment white 6 | LANSCO 8086 | Lansco Colors | 13463-67-7 | N/A | N/A | 4.25 |
| Fumed silica | Aerosil R972 | Evonik | 68611-44-9 | N/A | N/A | 2.2 |

| Chemical Name | Commercial ID | Manufacturer | CAS Number | Viscosity (cSt) | Molecular Weight (g/mol) | Specific Gravity |
|---|---|---|---|---|---|---|
| Lubricant | | | | | | |
| Trifluoromethyl C1-4 Alkyl Dimethicone | DM-100 | Grant Industries | 63148-56-1 | N/A | N/A | 0.99 |
| Dimethylsiloxane-(25-30% ethylene odixe) block copolymer | DBE-224 | Gelest | 68938-54-5 | 400 | 10,000 | 1.02 |
| Dimethylsiloxane-(50-55% ethylene odixe) block copolymer | DBE-621 | Gelest | 68938-54-5 | 100 | 2,500 | 1.03 |
| Silicone PEG-PPG block copolymer (30-40% PEG, 30-40% PPG, 20-40% PDMS) | Commercial Lubricant 1 | BYK | N/A | N/A | 3000-7000 | 1.035 |
| Soy Lecithin Powder | Soy Lecithin Powder | Modernist Pantry | N/A | N/A | N/A | N/A |

| Crosslinker | | | | | | |
|---|---|---|---|---|---|---|
| Poly(diethoxysiloxane) | PSI-021 | Gelest | 68412-37-3/11099-06-2 | N/A | 134.2 | 1.05-1.07 |

| Other | | | | | | |
|---|---|---|---|---|---|---|
| Molsiv adsobents 4A powder molecular sieve | Molsiv 4A | UOP | 1318-02-01 | N/A | N/A | N/A |

### Synthesis Examples

### Allyl-PEG (Monomer 3)

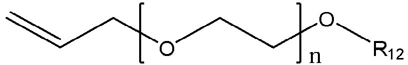

R₁₂ can be H, CH3, CH2CH3, NH2, SH, COOH

### Synthesis of 2-Chloro-2-oxo-1,3,2-dioxaphospholane (COP):

This compound was synthesized following the procedure described in US Patent Number 6,225,431 B1, Roderick W J Bowers et al. Synthesis confirmation through NMR.

### Synthesis of POA-ZW-1

Reaction was carried out under Argon. 10.179 g COP, 130 mL of anhydrous THF and 8.083g of triethylamine were mixed into reaction flask. Flask was cooled to 0°C. 35.634 g of AllylPEG (Eq Wt 500) was added dropwise. The reaction mixture was allowed to stir for 1h after complete addition at 0°C and then for 2h at room temperature. The precipitates were removed through filtration and the volatiles were evaporated. Phosphorus NMR shows a peak at 19.1 ppm corresponding to reaction of COP and hydroxyl group of allylPEG. Dissolved residue in 60 mL anhydrous acetonitrile and add 24.011 g triethylamine. Heat the mixture at 80 °C for ~7 days. Phosphorus NMR shows peak at 0.87 ppm corresponding to ring opened structure forming allylPEG capped with zwitterion.

### Synthesis of POA-ZW-3

Synthesis of AllylPEG chain end modified with dimethylbutylamine phosphocholine derivative: Reaction was carried out under anhydrous conditions. To 50.272 g of AllylPEG in 200 mL of anhydrous acetonitrile, is added 11.17g of triethylamine. Stir to mix and lower the temperature of the solution to between -5 °C to 0 °C. Add dropwise with vigorous stirring, 14.639 g of COP. After complete addition, stir at room temperature for 2h. Filter off the precipitates. To the filtrate add 15.290 g of N,N-Dimethylbutylamine and heat solution to 85 °C for 2 d. Cool to room temperature. Remove volatiles under high vacuum. Yellow viscous oil obtained and the product was characterized by proton and phosphorus NMR.

### Synthesis of POA-ZW-2

Synthesis of AllylPEG chain end modified with trimethyl phosphocholine derivative was synthesized in an analogous manner to that described for POA-ZW-3, except, the product of the reaction of COP with allylPEG was transferred into a pressure vessel and further reacted with trimethylamine gas to obtain a yellow viscous liquid that was characterized by proton and phosphorus NMR.

### General Synthesis Procedure for Polyoxyalkylene-zwitterionic (POA-ZW) sidechain functionalized organosiloxanes.

Reaction was carried under inert atmosphere. COP was synthesized as indicated in the material and method section and was more than 99% pure analytically. Hydride resin was first grafted with 25 mole% of curing group using toluene as solvent and platinum catalyst. Remaining hydrides were reacted with AllylPEG using additional Toluene and platinum catalyst. Once the reaction was complete, solution was cooled using ice/water bath. Triethylamine in slight excess was added followed by dropwise addition of COP to react with the hydroxyl group of PEG. The triethylamine hydrochloride salt formed was filtered off. Solvent and other volatiles were evaporated under high vacuum with temperature not exceeding 50 °C. Anhydrous acetonitrile and tertiaryamine were added and mixture were pressurized and/or heated to open the phosphonolane ring to obtain zwitterionic groups at the end of PEG chains.

Alternatively, Polydimethylsiloxane grafted with Polyoxyalkylene Coupled Zwitterionic Compounds with curing groups was also synthesized by using the reactive end functional Polyoxyalkylene Coupled Zwitterionic Compound POA-ZW. Hydride resin and allyltriethoxysilane are combined in a reaction flask in the presence of toluene (equivalent amount to hydride and allyltrimethoxysilane). The mixture was heated to 80 °C and Pt catalyst dissolved in xylene was added to the flask. The mixture was stirred for 1h and POA-ZW diluted in equivalent amount of toluene was added to the flask followed by additional Pt catalyst (dissolved in xylene) was added. The mixture was allowed to react for 1 h. Then chaser containing Pt catalyst and small amount of DMF was added. The mixture was allowed to react for 2h and then cooled to room temperature for storing under Argon. The synthesis was confirmed by NMR analysis.

### Synthesis of AM-48:

Reaction carried out under Argon. Hydride resin (10.070 g, HMS-301, hydride Eq. Wt. 250) transferred into a round bottom flask kept under a positive Ar atmosphere. 2.093 g of allyl triethoxysilane, 15.637g of anhydrous toluene, were added in to the reaction flask. The content was allowed to mix till the reaction temperature reached near 80°C. Next the catalyst, 16.5 mg of 2% Pt divinyl complex in xylene, mixed with additional 0.8045 g of xylene was added in to the reaction. Allowed the content to stir for 1 h. After 1 h, 30.306 g of anhydrous toluene was added followed by 15.138 g of allylPEG (Eq. Wt 500) was added to the reaction mixture. After 15 min of mixing, 29.0 mg of 2% Pt divinyl complex in xylene, mixed with additional 0.9112 g of xylene, was added to the reaction mixture. Reaction mixture was allowed to stir for 1 h. This concludes the phase 1 of the synthesis. Resin was cooled with ice water. Then, 3.287 g of triethylamine was added to the reaction mixture with stirring. This was followed by dropwise addition of 4.43 g of COP to the reaction mixture. After complete addition stir at room temperature for 1h. Filter precipitates and remove volatiles under high vacuum with temperature not exceeding 50 °C. Phosphorus NMR shows a peak at 18.5 ppm indicating reaction of COP with hydroxyl group of Allyl PEG. 60 mL of anhydrous acetonitrile and 5.937 g of N,N-Dimethylbutylamine were added and mixture was heated at 85 °C for 24 h. A Phosphorus NMR at this stage indicated a large peak at 0.369 ppm and a small peak at 18.5 ppm corresponding to over 85% ring opening, thus forming zwitterionic species at the end of PEG chain. 1.876 g of additional N,N-Dimethylbutylamine was added and mixture was heated at 85 °C for additional 7 h. The structure was confirmed via NMR.

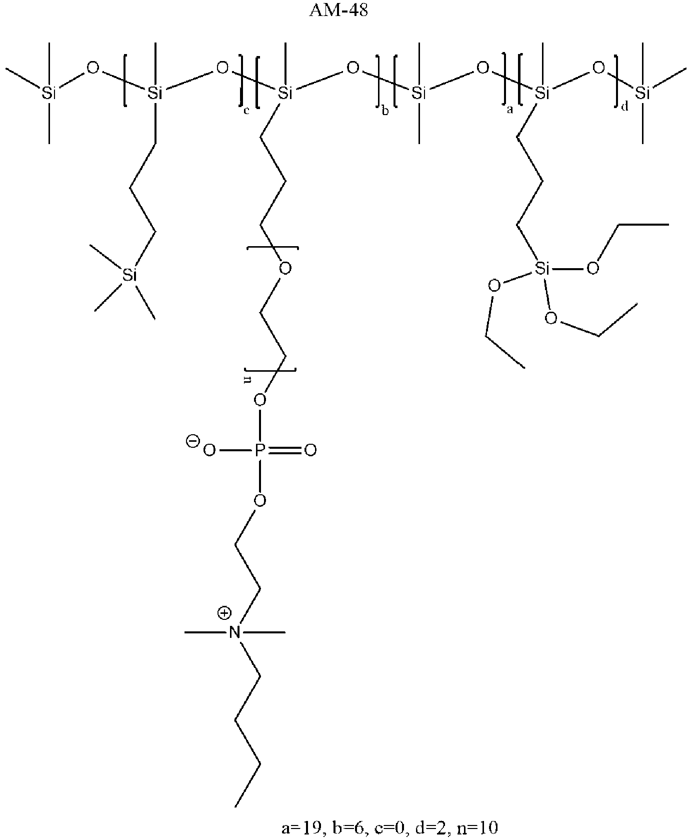

### Synthesis of AM-26: (Polyethylene Oxide Coupled Zwitterionic Organosiloxane Compounds with curing groups).

Reaction was carried out under Argon. 10.179 g COP, 130 mL of anhydrous THF and 8.083g of triethylamine were mixed into reaction flask. Flask was cooled to 0°C. 35.634 g of AllylPEG (Eq Wt 500) was added dropwise. The reaction mixture was allowed to stir for 1h after complete addition at 0°C and then for 2h at room temperature. The precipitates were removed through filtration and the volatiles were evaporated. Phosphorus NMR shows a peak at 19.1 ppm corresponding to reaction of COP and hydroxyl group of allylPEG. Dissolved residue in 60 mL anhydrous acetonitrile and add 24.011 g triethylamine. Heat the mixture at 80 °C for ~7 days. Phosphorus NMR shows peak at 0.87 ppm corresponding to ring opened structure forming allylPEG capped with zwitterion (POA-ZW-1).

In a reaction flask, 4.736 g of hydride resin (HMS-301 Eq Wt 250), 0.950 g of allyltriethoxysilane and 11.255 g of anhydrous toluene were combined. Mixture was stirred and heated to 80 °C. Catalyst mixture containing 8.4 mg of Pt catalyst dissolved in 0.2913 g of xylene was added to the flask. Mixture was stirred for 1 h and then 20.511g of toluene and11.061 g of POA-ZW-1 synthesized in the first step was added. Additionally, 26.1 mg of Pt catalyst dissolved in 0.8018 g in xylene was added. Mixture was allowed to react for 1h. Chaser containing 3 mL of DMF and 22.7 mg of Pt catalyst was added. Then the mixture was heated for 2h then cooled to room temperature and stored under Argon.

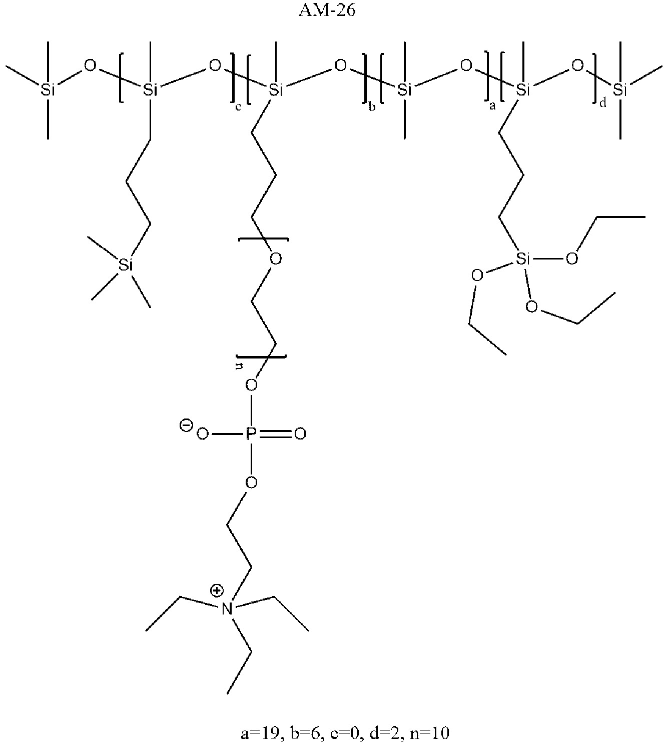

### Synthesis of AM-16: (Polydimethylsiloxane grafted with Polyethylene Coupled Zwitterionic Compounds without curing groups).

AM-16 was synthesized following a similar procedure to AM-48 except no allyltriethoxysilane was added to the reaction. Phase 1 of the reaction was conducted using 8 equivalences of allyl PEG. Later the hydroxyl groups were converted to zwitterions in phase 2.

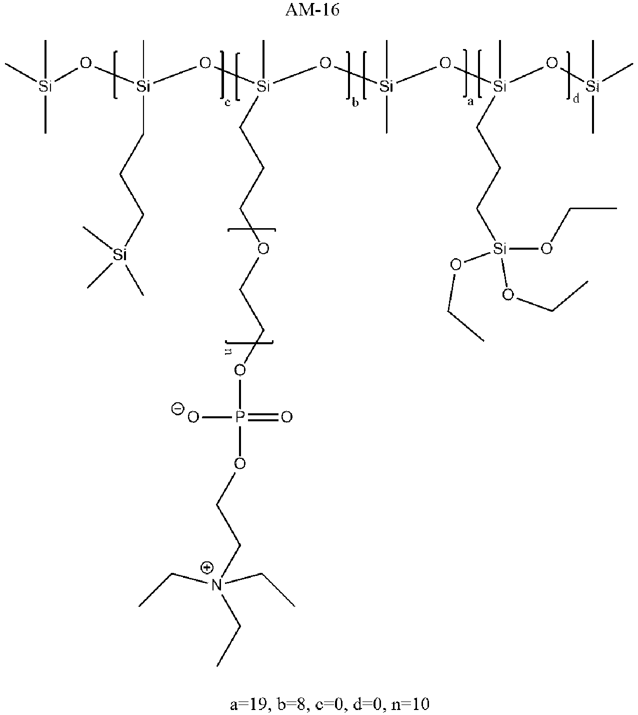

### Synthesis of AM-49: (Polydimethylsiloxane grafted with Polyethylene Coupled Zwitterionic Compounds without curing groups).

AM-49 was synthesized following a similar procedure to AM-48 except no allyltriethoxysilane was added to the reaction. Phase 1 of the reaction was conducted using 4 equivalences of allyl PEG and 4 equivalences of allyltrimethylsilane. Later the hydroxyl groups were converted to zwitterions in phase 2 using N,N-Dimethylbutylamine.

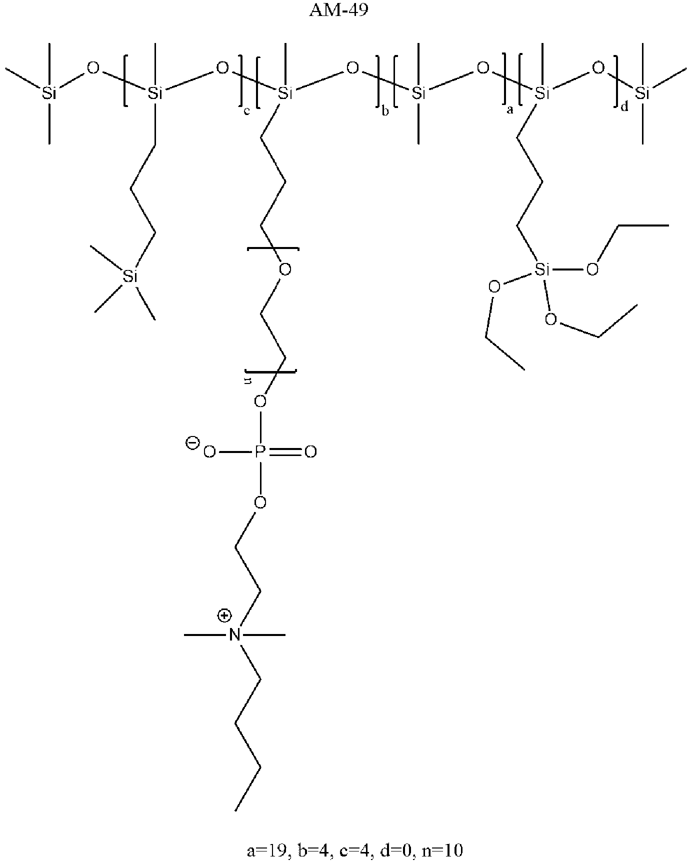

### Synthesis of AM-52:

Reaction carried out under Argon. Hydride resin (10.00 g, HMS-992) transferred into a round bottom flask kept under a positive Ar atmosphere. 2.026 g of allyl triethoxysilane, 12.117g of allyltrimethylsilane (TMS) 48.68g of anhydrous toluene, were added in to the reaction flask. The content was allowed to mix till the reaction temperature reached near 80°C. Next the catalyst, 28.5 mg of 2% Pt divinyl complex in xylene, mixed with additional 1.85 g of xylene was added in to the reaction. Allowed the content to stir for 1 h. After 1 h, 40.486 g of anhydrous toluene was added followed by 19.242 g of allylPEG (Eq. Wt 500) was added to the reaction mixture. After 15 min of mixing, 42.0 mg of 2% Pt divinyl complex in xylene, mixed with additional 1.94 g of xylene, was added to the reaction mixture. Reaction mixture was allowed to stir for 1 h. Resin was cooled with ice water. Then, 3 g of triethylamine was added to the reaction mixture with stirring. This was followed by dropwise addition of 5.48 g of COP to the reaction mixture. After complete addition stir at room temperature for 1h. Filter precipitates and remove volatiles under high vacuum with temperature not exceeding 50°C. Phosphorus NMR shows a peak at indicates the reaction of COP with hydroxyl group of Allyl PEG. 60 mL of anhydrous acetonitrile and 3.845 g of N N-Dimethylbutylamine were added and mixture was heated at 60°C until ring opening is 80-100% complete.

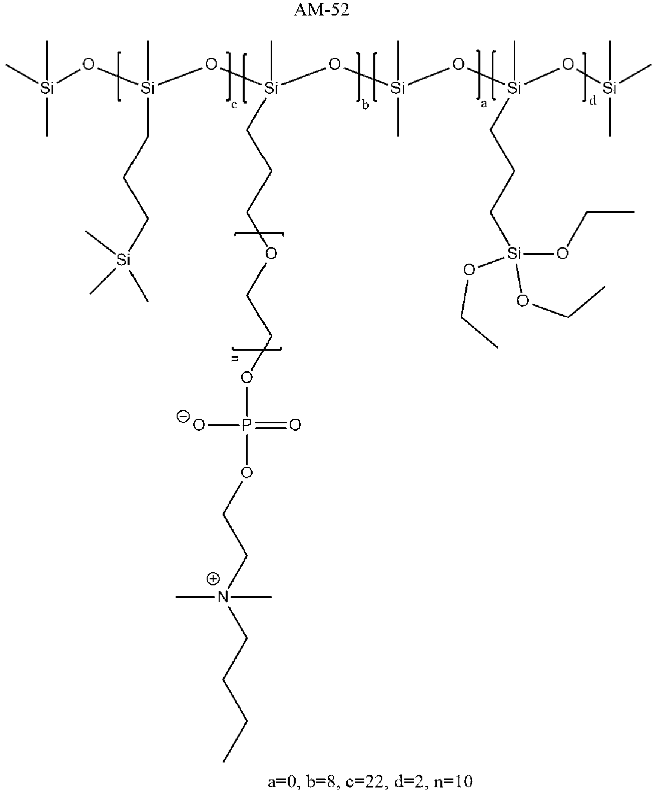

### Synthesis of AM-20

A copolymer with 75% polyethylene glycol grafts was synthesized using hydride resin HMS-301 following the procedure for AM-22 (except no allyltrimethylsilane was added). The remaining hydride was reacted with 25% curing groups to obtain AM-20).

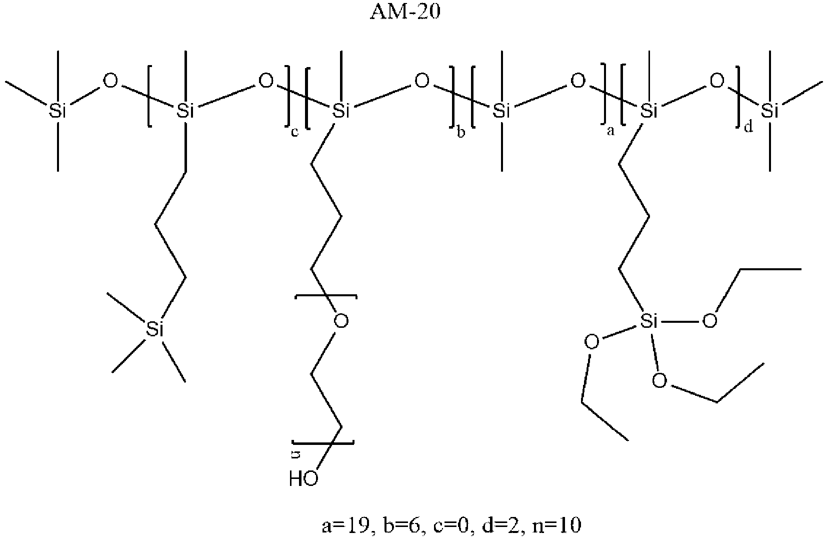

### Synthesis of AM-24

Hydride resin (50.537 g, HMS-992, hydride Eq. Wt. 65) was transferred into a round bottom flask kept under a positive Argon atmosphere. Then, 39.091 g of allyltrimethylsilane (SIA 0555.0, hydride Eq. Wt. 114.26), 10.109 g of allyltriethoxysilane, 202.292 g of anhydrous toluene, were added in to the reaction flask. The content was allowed to mix till the the reaction temperature reached near 80°C. Next, the catalyst, 146.8 mg of 2% Pt divinyl complex in xylene, mixed with additional 4.994 g of xylene was added in to the reaction. The content was stirred for 1 h. After 1 h of reaction, 384.313 g of anhydrous toluene was added followed by 199.610 g of allylPEG (Eq. Wt 500) to the reaction mixture. After 15 min of mixing, 301.7 mg of 2% Pt divinyl complex in xylene, mixed with additional 4.0038 g of xylene, was added to the reaction mixture. Reaction mixture was allowed to stir for 1 h. A chaser (24.9 mg of the same catalyst diluted in 0.4808 g of xylene) was added and continued stirring for 15 mins. The resin (AM-24) was cooled to room temperature and stored under Argon argon atmosphere.

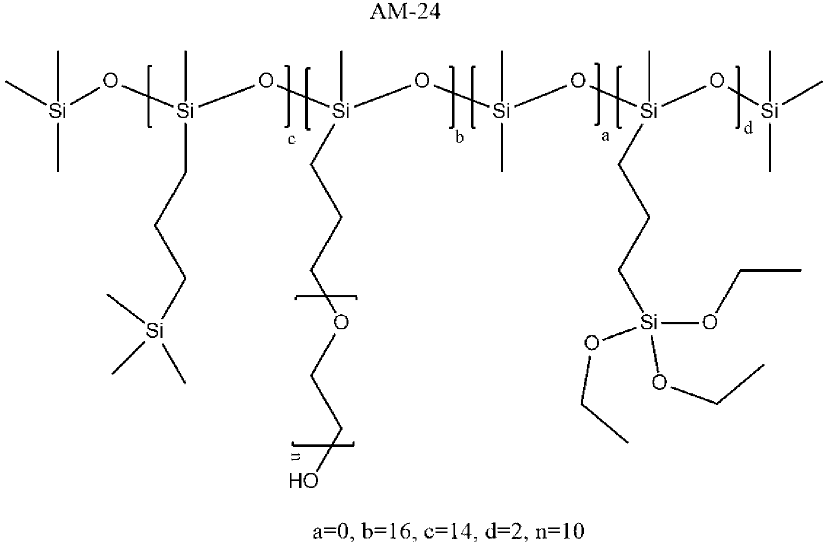

### Synthesis of AM-41

A copolymer with 25% polyethylene glycol grafts was synthesized by following the synthesis procedure for AM-24, wherein the corresponding amount of polyethylene glycol was reacted with 25 mol% of the hydride equivalent. Keeping the amount of curing group the same as AM-24, the amount of modular blocking group added balanced out the remaining hydride equivalents.

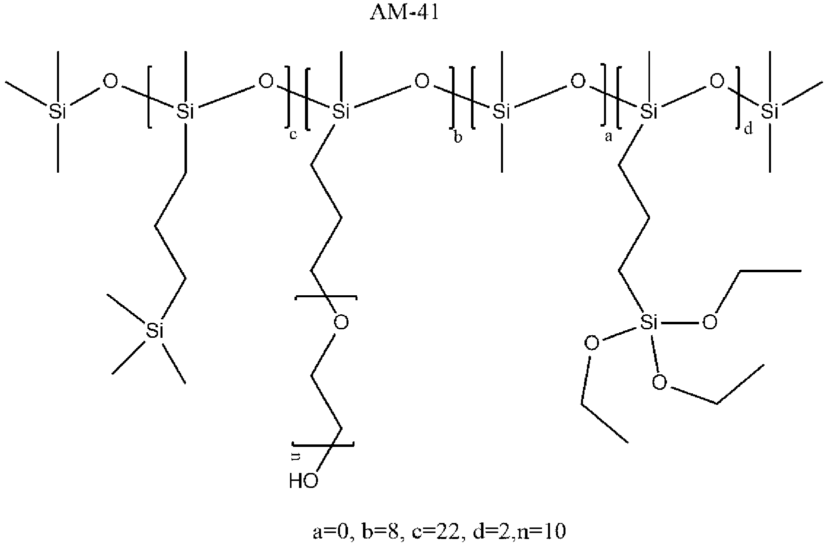

### Synthesis of AM-42

A copolymer with 10% polyethylene glycol grafts was synthesized by following synthesis of AM-24, wherein the corresponding amount of polyethylene glycol was reacted with 10 mol% of the hydride equivalent. Keeping the amount of curing group the same as AM-24, the amount of modular blocking group added balanced out the remaining hydride equivalents.

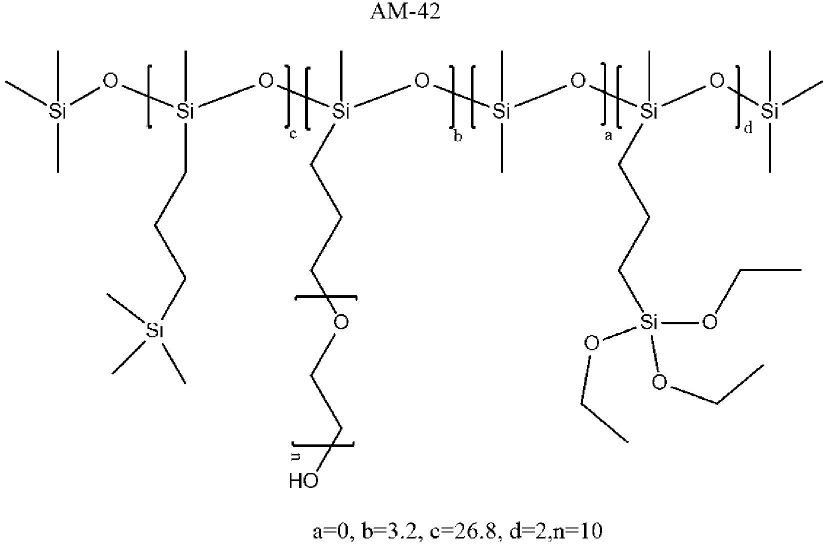

### Evaluation of release kinetics of different lubricants when Polyoxyalkylene-zwitterionic sidechain functionalized organosiloxane are introduced to the silicone matrix

Coating formulations were prepared using AM-26 and commercial lubricant 1. Commercial lubricant 1 is an amphiphilic silicone with PEG-PPG side chains. Coatings with no SAP but containing 5 wt% of commercial lubricant 1 were used as control (100210). Coatings with 5 wt% AM-26 were made with 5 wt% of commercial (100263). The formulations were applied with a 7.5 mils drawdown applicator onto aluminum coupons, and allowed to fully cure over 3 days at room humidity. In addition, additive-free silicone films were also drawn down on aluminum coupons with a 25 mils drawdown applicator, and also left to thoroughly cure (72 hrs).

The additive-free silicone films were cut into rectangles of approximately the same surface area, and each rectangle was weighed prior to use. Then, an additive-free rectangle was placed on top of every additive formulation made, ensuring that there are no air bubbles between the silicone rectangle and the formulation. Weight was recorded of each silicone rectangle at 30 minutes, 1 hour, and 24 hours, and normalized based on the area of the silicone rectangle.

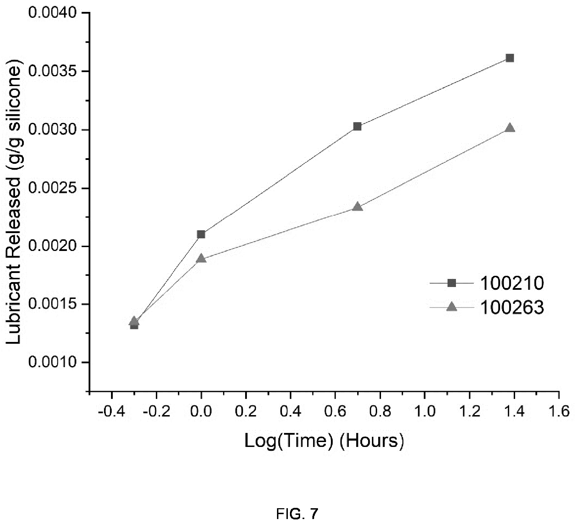

FIG. 7 demonstrates the ability to control release kinetics of select lubricants by adding reactive POA-ZW-sidechain functionalized organosiloxanes SAP into the matrix. When Commercial Lubricant 1 was combined with AM-26, the amount of lubricant leached and migrated into the additive-free silicone film was reduced. The results suggest that the polyoxyalkylene-zwitterionic sidechain functionalized organosiloxanes may provide lubricant retention properties arising from the ability to affiliate with the lubricant.

Compositions used for lubricant release experiment. Formulation 100210 contains commercial lubricant 1 while formulation 100263 contains both commercial lubricant 1 and AM-26.

| Material Name | Commercial Ref | 100210 | 100263 |
|---|---|---|---|
| Binder/Filler/Pigment | | | |
| Silanol Terminated Polydimethylsiloxanes | | 85.15% | 80.42% |
| Black Pigment | Black 30C965 | | |
| White Pigment | LANSCO 8086 | | |
| Filler | Aerosil R972 | | |
| Pigments Total | | | |
| Pigments + Filler Total | | | |
| Lubricant | | | |
| Hydrophilic polysiloxane fluid | DBE-224 | | |
| Hydrophilic polysiloxane fluid | DBE-621 | | |
| Hydrophilic polysiloxane fluid | Commercial Lubricant 1 | 5% | 5% |
| Sidechain Functionalized Organosiloxane | | | |
| Surface Active polymer | AM-26 | | 4.75% |
| Other ingredients | | | |
| Poly(Diethoxysiloxane) | PSI-021 | 9.05% | 9.05% |
| Dibutyltin dilaurate | DBTDL | 0.80% | 0.78% |
| Total | | 100 | 100 |

### Polyoxyalkylene-zwitterionic (POA-ZW) sidechain functionalized organosiloxane as surface active polymers described in the invention demonstrate broad miscibility with polydimethylsiloxanes, amphiphilic silicones and zwitterionic lubricants.

In order to determine properties of Polyoxyalkylene-zwitterionic sidechain functionalized organosiloxanes, a miscibility experiment was conducted. In this study, 5 non-reactive lubricants including a zwitterionic lubricant, soy lecithin, 1 reactive Polyoxyalkylene-zwitterionic sidechain functionalized organosiloxane compound (AM-26) and 4 reactive polyoxyalkylene sidechain functionalized organosiloxane compounds (AM-20, AM-24, AM-41, AM-42) were used. In each case, 1 gram of lubricant and 1 gram of SAP (assuming 100% solids) were vortex mixed for 15 seconds to ensure incorporation, and pictures were taken periodically to check the miscibility of the mixtures. They were then scored on a qualitative scale from 1-5, with 1 being immiscible and 5 being completely miscible.

Both AM-20 and AM-26 have very similar chemical structure, except AM-26 that contains polyoxyalkylene coupled zwitterionic side chains. When comparing the miscibility of AM-20 vs. AM-26 in different lubricants, they are both immiscible in pure silicone lubricant. However, AM-26 display significantly better miscibility in all 4 amphiphilic lubricants compared to AM-20. Specifically, AM-26 show very good compatibility with zwitterionic soy lecithin lubricant.

### Miscibility scores for 5 lubricants compared against Polyoxyalkylene sidechain functionalized organosiloxanes and Polyoxyalkylene-zwitterionic sidechain functionalized organosiloxanes.

| Formulation | SAP | Lubricant | t=0 | 1 hr | 4 hrs |
|---|---|---|---|---|---|
| X1 | AM-20 (48.49% PEG, 9.70% TMS) | Commercial Lubricant 1 (30-40% PEG, 30-40% PPG, 20-40% PDMS) | 5 | 5 | 5 |
| X7 | AM-26 (39.49% PEG, 20.1% ZW, 31.15% PDMS) | | 5 | 5 | 5 |
| X2 | AM-20 (48.49% PEG, 9.70% TMS) | DBE-224 (25-30% PEG) | 4 | 1 | 1 |
| X8 | AM-26 (39.49% PEG, 20.1% ZW, 31.15% PDMS) | | 5 | 1 | 1 |
| X3 | AM-20 (48.49% PEG, 9.70% TMS) | DBE-621 (50-55% PEG) | 5 | 5 | 5 |
| X9 | AM-26 (39.49% PEG, 20.1% ZW, 31.15% PDMS) | | 5 | 5 | 5 |
| X4 | AM-20 (48.49% PEG, 9.70% TMS) | DMS-T21 (Silicone) | 4 | 1 | 1 |
| X10 | AM-26 (39.49% PEG, 20.1% ZW, 31.15% PDMS) | | 4 | 1 | 1 |
| X5 | AM-20 (48.49% PEG, 9.70% TMS) | Soy Lecithin (Zwitterionic Lubricant) | 4 | 1 | 1 |
| X6 | AM-24 (60% PEG, 8.5% TMS) | | 4 | 4 | 4 |
| X11 | AM-26 (39.49% PEG, 20.1% ZW, 31.15% PDMS) | | 5 | 5 | 5 |
| X12 | AM-41 (40% PEG, 18% TMS) | | 4 | 1 | 1 |
| X13 | AM-42 (20% PEG, 28% TMS) | | 5 | 5 | 5 |

### Example Formulations containing Polyoxyalkylene-zwitterionic (POA-ZW) sidechain functionalized organosiloxanes.

Silanols with varying molecular weights were combined and speedmixed at 3500 rpm for 1 min. Then the corresponding fillers, pigments and additives were incorporated by speedmixing; 1^{st} a 20 sec ramp to 3500 rpm and holding for 1 min of additional mixing at that rpm. Next the lubricant/s, SAPs were added to the mixture and speed mixed for 1 min at 2500 rpm. Finally, Polydiethoxysiloxane and catalyst were added and speedmixed for 1 min at 2500 rpm.

### POA-ZW sidechain functionalized organosiloxanes formulations

| Material Name | Commercial Ref | 100039 | 100153 | 100154 | 100155 | 100156 | 100157 |
|---|---|---|---|---|---|---|---|
| Binder/Filler/Pigment | | | | | | | |
| Silanol Terminated | | 71.85% | 75.67% | 75.67% | 79.87% | 79.64% | 71.68% |
| Polydimethylsiloxanes | | | | | | | |
| Black Pigment | Black 30C965 | 0.38% | | | | | |
| White Pigment | LANSCO 8086 | 0.95% | | | | | |
| Filler | Aerosil R972 | 2.45% | | | | | |
| Pigments Total | | 1.33% | 0% | 0% | 0% | | |
| Pigments + Filler Total | | 3.78% | 0% | 0% | 0% | | |
| Lubricant | | | | | | | |
| Fluorinated polysiloxane fluid | DM-100 | | | | | | |
| Fluorinated polysiloxane fluid | DBE-224 | 10.02% | | | | | |
| Hydrophilic polysiloxane fluid | DBE-621 | | | 10% | | | |
| Hydrophilic polysiloxane fluid | Commercial Lubricant 1 | | 10% | | | | 10.00% |
| Zwitterionic fluid | Soy Lecithin | | | | | | |
| Zwitterionic fluid | AM-49 | | | | 5% | | |
| Sidechain Functionalized Organosiloxane | | | | | | | |
| Surface active polymer | AM-14 | | | | | | 9.00% |
| Surface active polymer | AM-16 | 5.01% | | | | | |
| Surface active polymer (32.50% solids) | AM-26 | | 4.5%* | 4.5%* | 4.75%* | 10.00% | |
| Other ingredients | | | | | | | |
| Poly(Diethoxysiloxane) | PSI-021 | 8.59% | 9.04% | 9.04% | 9.55% | 9.52% | 8.57% |
| Dibutyltin dilaurate | DBTDL | 0.75% | 0.79% | 0.79% | 0.83% | 0.83% | 0.75% |
| Total | | 100 | 100 | 100 | 100 | 100 | 100 |
| *Considered at 100% solids | | | | | | | |

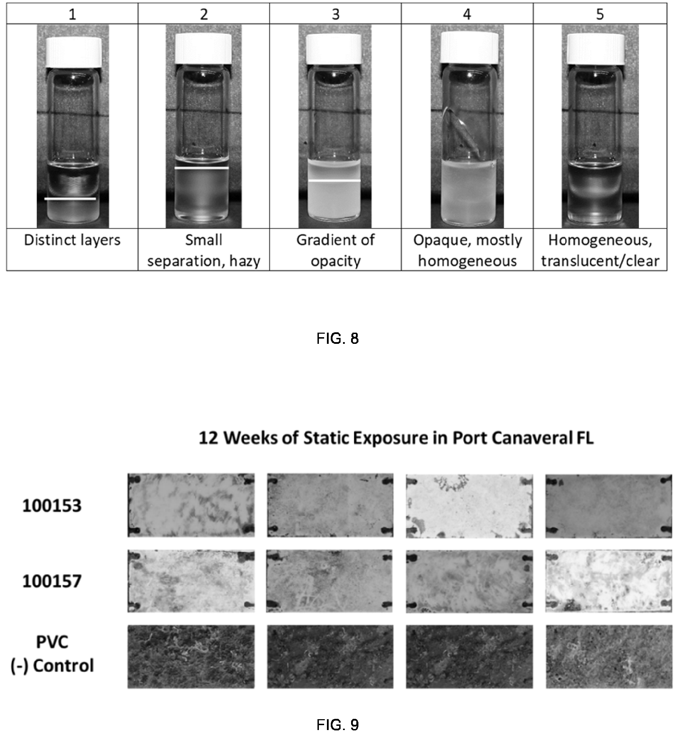

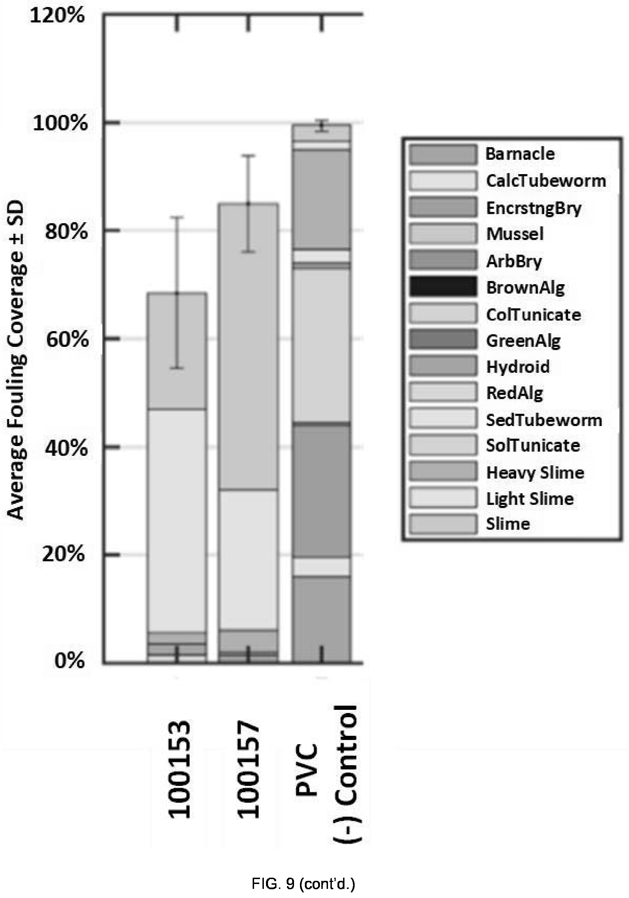

The pictures in FIG. 9 indicate the biofouling accumulated on each coating formulation. An Uncoated PVC panel was used as the negative control and each treatment had 4 replicates. The field performance indicates that the coating composition with AM-26 (mostly showed light slime) performs better than the coating composition with AM-14.

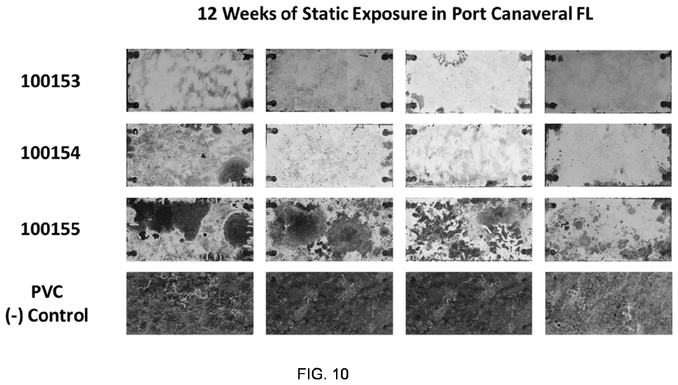

The pictures in FIG. 10 indicate the coating composition with AM-26 demonstrated biofouling control. Formulation 100153 displayed the best performance out of all.

### Polyoxyalkylene-zwitterionic (POA-ZW) sidechain functionalized organosiloxanes described in the disclosure and/or lubricant combinations can be used as an additive, surface modifier and a solution.

One or more Polyoxyalkylene-zwitterionic (POA-ZW) sidechain functionalized organosiloxanes can be combined with one or more corresponding lubricants, one or more solvents and other additives to prepare an Active Performance Ingredients (API) package (liquid or solid form). The API package then can be used as an additive in coating systems, as surface treatment of substrates, or a treatment solution to provide but not limited to biofouling control, anti-ice, anti-graffiti, and easy clean properties in the final form.

In a particular case, AM-26 was combined with amphiphilic silicone lubricant at a 1:2.22 weight ratio. The mixture was stirred to prepare the API package. The package may also contain other additives for purposes other than mentioned above.

### Example API package with ZW SAP

| Material Name Lubricant | Commercial Ref | API Package 3 | API Package 4 |
|---|---|---|---|
| Hydrophilic polysiloxane fluid-2 | BYK-331 | 37.94% | 36.65% |
| Sidechain Functionalized Organosiloxane | | | |
| Surface active polymer (27.5% solids) | AM-26 | 62.06%* | 59.96%* |
| Other ingredients | | | |
| Molecular sieve moisture scavenger | Molsiv 4A | 0% | 3.38% |
| Poly(Diethoxysiloxane) | PSI-021 | 0% | 0% |
| Dibutyltin dilaurate | DBTDL | 0% | 0% |
| Total | | 100 | 100 |
| *Considered at 100% solids | | | |

### XPS Depth Profiling of formulations containing Polyoxyalkylene-zwitterionic (POA-ZW) sidechain functionalized organosiloxanes.

The stratification of Polyoxyalkylene-zwitterionic sidechain functionalized organosiloxanes in silicone coating systems was evaluated via X-ray photoelectron spectroscopy (XPS). The surface concentration of SAPs in coatings is determined by quantifying the surface concentration of PEG C-O% from a high resolution C^{1s} XPS spectrum. Coatings were etched at a controlled rate using argon ion milling (monatomic, 10keV) for 1 hour, with high resolution C1s spectra measured every 180s.

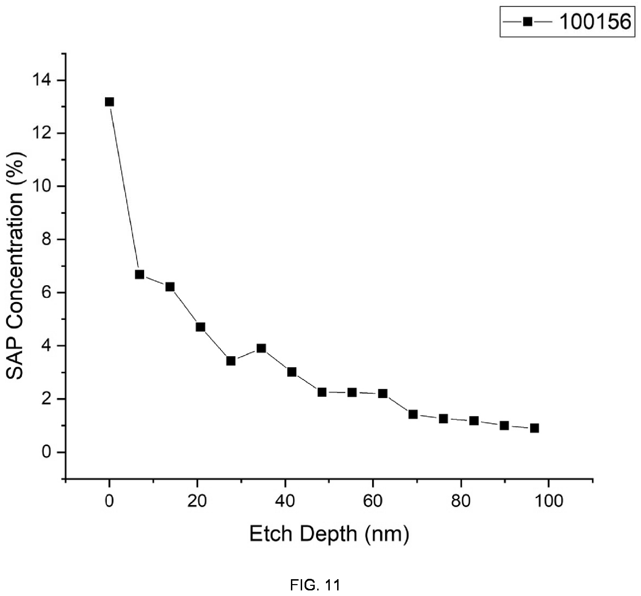

From example 100156, it is confirmed that Polyoxyalkylene-zwitterionic sidechain functionalized organosiloxanes SAPs are stratifying, as a higher concentration of SAP is present at the coating surface and decreases monotonically below the surface (FIG. 11).

### Prophetic example 1: Synthesis of ZW-POA-PFPE-POA-ZW

A PEFPE diol can be used as starting material to synthesize ZW-POA-PFPE-POA-ZW. Fluorolink E10H (Solvay, Average Eq Wt= 900-1000 g/mol, Specific gravity= 1.73 g/mL, viscosity =115cSt) can be reacted with COP and subsequently ring opened using a tertiary amine (similar to the procedure described in synthesis of AM-48) such as triethyl amine to obtain ZW-POA-PFPE-POA-ZW. Such resin can be used an anti-fouling additive in coating compositions.

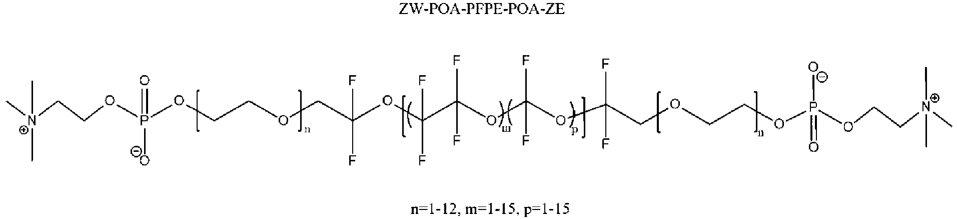

### Prophetic example 2: Synthesis of R-POA-ZW where the reactive group is an alkoxy silane.

A polyalkelyne oxide functional silane can be used to create R-POA-ZW. SIH 6188.0 (Gelest Inc, Average Eq Wt= 575-750 g/mol) can be reacted with COP and subsequently ring opened using a tertiary amine such as triethyl amine (similar to the procedure described in synthesis of AM-48) to obtain ZW-POA-PFPE-POA-ZW. Such resin can be reacted in to solgel coatings for improved biofouling and anti-ice adhesion properties.

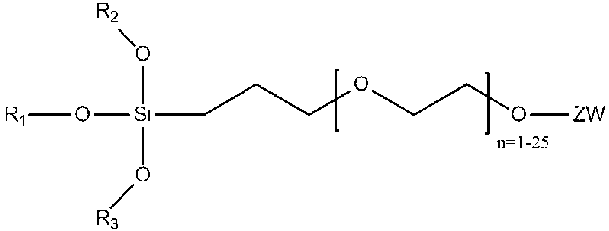

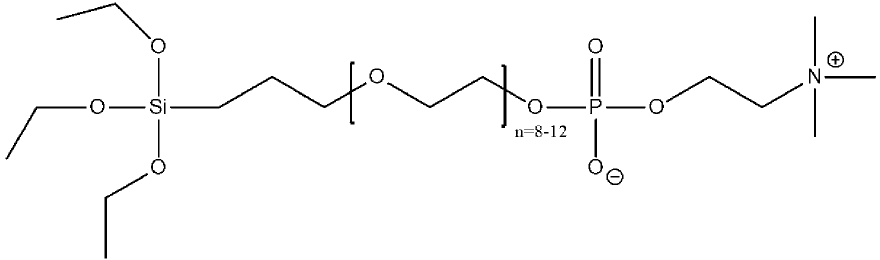

It should be emphasized that the above-described embodiments of the present disclosure are merely possible examples of implementations, and are set forth only for a clear understanding of the principles of the disclosure. Many variations and modifications may be made to the above-described embodiments of the disclosure without departing substantially from the spirit and principles of the disclosure. All such modifications and variations are intended to be included herein within the scope of this disclosure.

The present disclosure will be better understood upon reviewing the following aspects which should not be confused with the claims. In some instances the numbered aspects can be combined with any other numbered aspects below and with any of the various aspects of the disclosure presented above even if, for the sake of clarity and brevity, only certain aspects are explicitly described as such.

Aspect 1. A polyoxyalkylene zwitterionic moiety comprising: (i) a polyoxyalkylene chain having a first end and a second end opposite the first end; (ii) a reactive end group covalently attached to the first end, optionally using a linker; and (iii) a zwitterionic moiety covalently attached at the second, optionally using a linker.

Aspect 2. The polyoxyalkylene zwitterionic moiety according to any one of Aspects 1-27, wherein the zwitterionic moiety is covalently attached without a linker.

Aspect 3. The polyoxyalkylene zwitterionic moiety according to any one of Aspects 1-27, wherein the reactive end group is covalently attached without a linker.

Aspect 4. The polyoxyalkylene zwitterionic moiety according to any one of Aspects 1-27, wherein the reactive end group is covalently attached via a linker selected from the group consisting of substituted and unsubstituted C₁-C₅ alkyl and heteroalkyl.

Aspect 5. The polyoxyalkylene zwitterionic moiety according to any one of Aspects 1-27, wherein the zwitterionic moiety is covalently attached via a linker selected from the group consisting of substituted and unsubstituted C₁-C₅ alkyl and heteroalkyl.

Aspect 6. A polyoxyalkylene zwitterionic moiety comprising: (i) a polyoxyalkylene chain; (ii) a zwitterionic moiety covalently attached at a first end of the polyoxyalkylene chain, optionally using a linker; and (iii) a reactive end group covalently attached to the zwitterionic moiety, optionally using a linker.

Aspect 7. The polyoxyalkylene zwitterionic moiety according to any one of Aspects 1-27, wherein the zwitterionic moiety is covalently attached without a linker.

Aspect 8. The polyoxyalkylene zwitterionic moiety according to any one of Aspects 1-27, wherein the reactive end group is covalently attached without a linker.

Aspect 9. The polyoxyalkylene zwitterionic moiety according to any one of Aspects 1-27, wherein the reactive end group is covalently attached via a linker selected from the group consisting of substituted and unsubstituted C₁-C₅ alkyl and heteroalkyl.

Aspect 10. The polyoxyalkylene zwitterionic moiety according to any one of Aspects 1-27, wherein the zwitterionic moiety is covalently attached via a linker selected from the group consisting of substituted and unsubstituted C₁-C₅ alkyl and heteroalkyl.

Aspect 11. The polyoxyalkylene zwitterionic moiety according to any one of Aspects 1-27, wherein the polyoxyalkylene chain is selected from the group consisting of poly(ethylene glycol), poly(propylene glycol), poly(ethylene glycol-ran-propylene glycol), poly(ethylene glycol-block-propylene glycol), poly(butylene glycol), co-polymers containing poly(butylene glycol), and a combination thereof.

Aspect 12. The polyoxyalkylene zwitterionic moiety according to any one of Aspects 1-27, wherein the polyoxyalkylene chain comprises about 1 to about 50 repeat units, about 2 to about 20 repeat units, about 2 to about 5 repeat units, about 5 to about 10 repeat units, about 11 to about 15 repeat units, about 16 to about 20 repeat units, or about 5 to about 25 repeat units.

Aspect 13. The polyoxyalkylene zwitterionic moiety according to any one of Aspects 1-27, wherein the reactive end group is selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

Aspect 14. The polyoxyalkylene zwitterionic moiety according to any one of Aspects 1-27, wherein the reactive end group is selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof.

Aspect 15. A polyoxyalkylene zwitterionic moiety having a structure according to the following formula:

Rx₆-L₆-A₆-L'₆-Z₆

where each occurrence of Z₆ is a zwitterionic moiety; where each occurrence of A₆ is a substituted or unsubstituted hydrophilic polyoxyalkylene; where each occurrence of L₆ and L'₆ is independently none, a C₁-C₁₂ alkyl or heteroalkyl linker, or a C₁-C₅ alkyl or heteroalkyl linker; and where each occurrence of Rx₆ is a reactive end group.

Aspect 16. The polyoxyalkylene zwitterionic moiety according to any one of Aspects 1-27, wherein each occurrence A₆ is -(O(CH₂)ₒ)ₚ-, where o is an integer 2, 3, 4, 5, or 6; and p is an integer from 1 to 50, from 2 to 20, from 2 to 5, from 5 to 10, from 11 to 15, from 16 to 20, or from 5 to 25.

Aspect 17. The polyoxyalkylene zwitterionic moiety according to any one of Aspects 1-27, wherein Rx₆ is selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

Aspect 18. The polyoxyalkylene zwitterionic moiety according to any one of Aspects 1-27, wherein Rx₆ is selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof.

Aspect 19. A polyoxyalkylene zwitterionic moiety having a structure according to the following formula:

Rx₆-L₆-Z₆-L'₆-A₆

where each occurrence of Z₆ is a zwitterionic moiety; where each occurrence of A₆ is a substituted or unsubstituted hydrophilic polyoxyalkylene; where each occurrence of L₆ and L'₆ is independently none, a C₁-C₁₂ alkyl or heteroalkyl linker, or a C₁-C₅ alkyl or heteroalkyl linker; and where each occurrence of Rx₆ is a reactive end group.

Aspect 20. The polyoxyalkylene zwitterionic moiety according to any one of Aspects 1-27, wherein each occurrence A₆ is -(O(CH₂)ₒ)ₚ-, where o is an integer 2, 3, 4, 5, or 6; and p is an integer from 1 to 50, from 2 to 20, from 2 to 5, from 5 to 10, from 11 to 15, from 16 to 20, or from 5 to 25.

Aspect 21. The polyoxyalkylene zwitterionic moiety according to any one of Aspects 1-27, wherein Rx₆ is selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

Aspect 22. The polyoxyalkylene zwitterionic moiety according to any one of Aspects 1-27, wherein Rx₆ is selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof.

Aspect 23. The polyoxyalkylene zwitterionic moiety according to any one of Aspects 1-27, wherein the zwitterionic moiety (Z₆) is selected from the group consisting of phosphates, sulfonates or carboxylates.

Aspect 24. The polyoxyalkylene zwitterionic moiety according to any one of Aspects 1-27, wherein the zwitterionic moiety (Z₆) is selected from the group consisting of aminoalkyl phosphonic acids, aminoalkyl carboxylic acids, and aminoalkyl sulfonic acids.

Aspect 25. The polyoxyalkylene zwitterionic moiety according to any one of Aspects 1-27, wherein the zwitterionic moiety (Z₆) is selected from the group consisting of sulfobetaine, carboxybetaine, glycine betaine, trimethylamine *N*-oxide, and phosphoryl choline.

Aspect 26. The polyoxyalkylene zwitterionic moiety according to any one of Aspects 1-27, wherein the zwitterionic moiety (Z₆) comprises a terminal end that is positively charged.

Aspect 27. The polyoxyalkylene zwitterionic moiety according to any one of Aspects 1-27, wherein the zwitterionic moiety (Z₆) comprises a terminal end that is negatively charged.

Aspect 28. A zwitterionic sidechain functionalized organosiloxane comprising: (i) an organosiloxane backbone; (ii) at least one polyoxyalkylene chain having a tethered end covalently attached to the polysiloxane backbone and a free end opposite to the tethered end; (iii) a zwitterionic moiety covalently attached at the free end of the polyoxyalkylene chain; and (iv) at least one reactive end group.

Aspect 29. The zwitterionic sidechain functionalized organosiloxane according to any one of Aspects 28-69, wherein the organosiloxane backbone is linear.

Aspect 30. The zwitterionic sidechain functionalized organosiloxane according to any one of Aspects 28-69, wherein the organosiloxane backbone is branched.

Aspect 31. The zwitterionic sidechain functionalized organosiloxane according to any one of Aspects 28-69, wherein the organosiloxane backbone comprises a number of repeat units from 2 to 200, from 5 to 100, from 5 to 50, from 10 to 100, from 10 to 200, from 10 to 50, from 20 to 200, or from 50 to 250.

Aspect 32. A zwitterionic sidechain functionalized organosiloxane comprising: (i) an organosiloxane backbone; (ii) a zwitterionic moiety covalently attached to the polysiloxane backbone; (iii) at least one polyoxyalkylene chain having a tethered end covalently attached to the zwitterionic moiety and a free end opposite to the tethered end; and (iv) at least one reactive end group.

Aspect 33. The zwitterionic sidechain functionalized organosiloxane according to any one of Aspects 28-69, wherein the organosiloxane backbone is linear.

Aspect 34. The zwitterionic sidechain functionalized organosiloxane according to any one of Aspects 28-69, wherein the organosiloxane backbone is branched.

Aspect 35. The zwitterionic sidechain functionalized organosiloxane according to any one of Aspects 28-69, wherein the organosiloxane backbone comprises a number of repeat units from 2 to 200, from 5 to 100, from 5 to 50, from 10 to 100, from 10 to 200, from 10 to 50, from 20 to 200, or from 50 to 250.

Aspect 36. The zwitterionic sidechain functionalized organosiloxane according to any one of Aspects 28-69, wherein one or more of the polyoxyalkylene chain, the zwitterionic moiety, and the reactive end group are each covalently attached via a linker group which may be the same or different.

Aspect 37. The zwitterionic sidechain functionalized organosiloxane according to any one of Aspects 28-69, further comprising one or more additional polyoxyalkylene chains that do not have the zwitterionic moiety covalently attached.

Aspect 38. The zwitterionic sidechain functionalized organosiloxane according to any one of Aspects 28-69, wherein the polyoxyalkylene chains are independently selected from the group consisting of poly(ethylene glycol), poly(propylene glycol), poly(ethylene glycol-*ran-*propylene glycol), poly(ethylene glycol*-block-*propylene glycol), poly(butylene glycol), co-polymers containing poly(butylene glycol), and a combination thereof.

Aspect 39. The polyoxyalkylene zwitterionic moiety according to any one of Aspects 28-69, wherein the polyoxyalkylene chain comprises about 1 to about 50 repeat units, about 2 to about 20 repeat units, about 2 to about 5 repeat units, about 5 to about 10 repeat units, about 11 to about 15 repeat units, about 16 to about 20 repeat units, or about 5 to about 25 repeat units.

Aspect 40. The zwitterionic sidechain functionalized organosiloxane according to any one of Aspects 28-69, wherein the organosiloxane backbone is nonreactive with silicone condensation cure chemistry, is nonreactive with platinum addition cure silicone chemistry, is nonreactive with epoxy cure chemistry, and/or is nonreactive with polyurethane chemistry.

Aspect 41. The zwitterionic sidechain functionalized organosiloxane according to any one of Aspects 28-69, wherein the reactive end group is selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

Aspect 42. The zwitterionic sidechain functionalized organosiloxane according any one of Aspects 28-69, wherein the reactive end group is selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof.

Aspect 43. The zwitterionic sidechain functionalized organosiloxane according to any one of Aspects 28-69, wherein the linker group comprises a C₁-C₁₂ alkyl or heteroalkyl or a C₁-C₅ alkyl or heteroalkyl.

Aspect 44. The zwitterionic sidechain functionalized organosiloxane according to any one of Aspects 28-69, wherein the reactive end group is covalently attached to the organosiloxane backbone via a second polyoxyalkylene chain, via an alkyl chain, via an organosiloxane chain, and/or via a heteroalkyl chain.

Aspect 45. A zwitterionic sidechain functionalized organosiloxane having a structure according to the following formula: 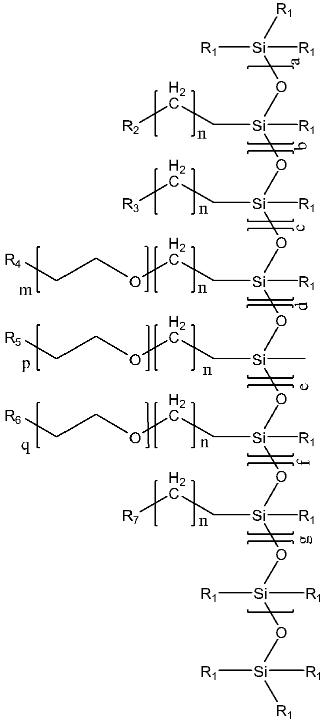 wherein each occurrence of R₁ is independently selected from the group consisting of substituted and unsubstituted C₁-C₅ alkyl and substituted and unsubstituted phenyl, and preferably where each occurrence of R₁ is independently selected from the group consisting of CH₃, -CH₂-CH₃,-CH₂-CH₂-CF₃, and phenyl; wherein each occurrence of R₂ is independently selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines; wherein each occurrence of R₃ is independently a biocidal moiety, a zwitterionic moiety, or a non-reactive polyoxyalkylene; wherein each occurrence of R₄ is independently a functional group such as -NH₂, -NR'H, -COOH, or -OH; wherein each occurrence of R₅ is independently a zwitterionic moiety; wherein each occurrence of R₆ is independently a biocidal moiety; wherein each occurrence of R₇ is independently a polyorganosiloxane having a structure from any of **-**Si(CH₃)₃, -Si(CH₂CH₃)₃, [-Si(CH₃)₂-O-]ᵢ-Si (CH₃)₃ where i can be 1-10 or a short fluorinated moiety such as -CF₃ or -(CF₂)ⱼ-CF₃, where j can be 1-10; where a is in integer from 0 to 20, 1 to 20, 0 to 12, 0 to 7, 1 to 7, or 3 to 15; where b is an integer from 0 to 20, 1 to 20, 0 to 12, 0 to 7, 1 to 7, or 3 to 15; where c is an integer from 0 to 20, 1 to 20, 0 to 12, 0 to 7, 1 to 7, or 3 to 15; where d is an integer from 1 to 20, 2 to 20, 1 to 12, 1 to 7, 3 to 7, or 3 to 15; where e is an integer from 0 to 20, 1 to 20, 0 to 12, 0 to 7, 1 to 7, or 3 to 15; where f is an integer from 0 to 20, 1 to 20, 0 to 12, 0 to 7, 1 to 7, or 3 to 15; where g is an integer from 0 to 50, 0 to 30, 0 to 20, 1 to 50, 0 to 12, 0 to 7, 1 to 7, or 3 to 15; where each occurrence of n is independently an integer 0, 1, 2, 3, 4, 5, 6, 7, 8, 9, 10; where each occurrence of m is independently an integer from 1 to 20, 1 to 15, 1 to 12, 2 to 7, 3 to 7, 2 to 12, or 3 to 15; where each occurrence of p is independently an integer from 1 to 20, 1 to 15, 1 to 12, 2 to 7, 3 to 7, 2 to 12, or 3 to 15; and where each occurrence of q is independently an integer from 1 to 20, 1 to 15, 1 to 12, 2 to 7, 3 to 7, 2 to 12, or 3 to 15.

Aspect 45b. The zwitterionic sidechain functionalized organosiloxane of aspect 45:
where a is in integer from 0 to 20;
where b is an integer from 0 to 20
where c is an integer from 0 to 20;
where d is an integer from 1 to 20;
where e is an integer from 0 to 20;
where f is an integer from 0 to 20;
where g is an integer from 0 to 50;
where each occurrence of n is independently an integer from 0 to 5;
where each occurrence of m is independently an integer from 1 to 20;
where each occurrence of p is independently an integer from 1 to 20; and
where each occurrence of q is independently an integer from 1 to 20.

Aspect 46. The zwitterionic sidechain functionalized organosiloxane according to any one of Aspects 28-69, wherein b+c is greater than or equal to 1, 2, 3, 4, or more.

Aspect 46b. The zwitterionic sidechain functionalized organosiloxane according to Aspect 46, wherein b+c is greater than or equal to 1.

Aspect 47. The zwitterionic sidechain functionalized organosiloxane according to any one of Aspects 28-69, wherein b is an integer from 1 to 20, 1 to 3, 2 to 10, 3 to 12, 2 to 15, or 3 to 18.

Aspect 47b. The zwitterionic sidechain functionalized organosiloxane according to Aspect 47, wherein b is an integer from 1 to 20.

Aspect 48. The zwitterionic sidechain functionalized organosiloxane according to any one of Aspects 28-69, wherein R₅ comprises a phosphorylcholine.

Aspect 49. A zwitterionic sidechain functionalized organosiloxane having a structure according to the following formula 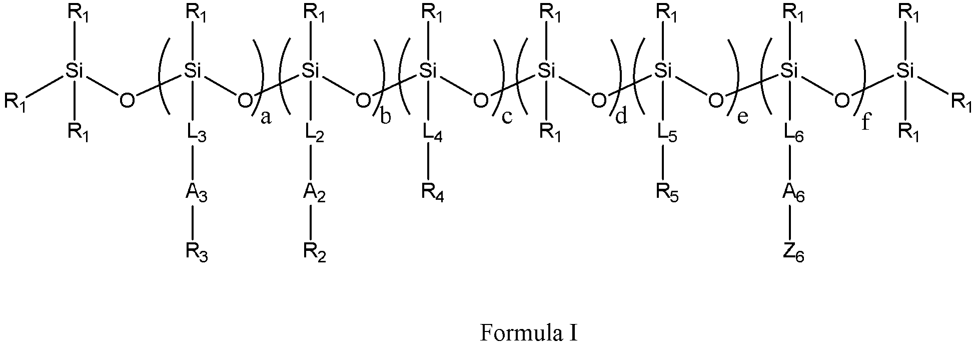 where each occurrence of R₁ is independently a substituted or unsubstituted C₁-C₅ alkyl, a substituted or unsubstituted C₁-C₅ heteroalkyl, or a substituted or unsubstituted phenyl; where each occurrence of R₂ is independently a substituted or unsubstituted C₁-C₅ alkyl, a substituted or unsubstituted C₁-C₅ heteroalkyl, or a hydroxyl; where each occurrence of R₃ is independently a reactive end group; where each occurrence of R₄ is independently a substituted or unsubstituted organosiloxane or a substituted or unsubstituted alkyl; where each occurrence of R₅ is independently a reactive end group; where each occurrence of L₂, L₃, L₄, L₅, and L₆ is independently a substituted or unsubstituted C₁-C₁₂ alkyl or a substituted or unsubstituted C₁-C₁₂ heteroalkyl; where each occurrence of A₂, A₃, and A₆ is independently a substituted or unsubstituted hydrophilic polyalkylene glycol; where each occurrence of Z₆ is a zwitterionic moiety; where a is in integer from 0 to 50, 0 to 20, 0 to 15, 1 to 50, 1 to 20, 1 to 15, or 2 to 15; where b is an integer from 0 to 50, 0 to 20, 0 to 15, 1 to 50, 1 to 20, 1 to 15, or 2 to 15; where c is an integer from 0 to 50, 0 to 20, 0 to 15, 1 to 50, 1 to 20, 1 to 15, or 2 to 15; where d is an integer from 0 to 100, 0 to 50, 0 to 20, 0 to 15, 1 to 100, 1 to 50, 1 to 30, 1 to 25, or 2 to 25; where e is an integer from 0 to 50, 0 to 20, 0 to 15, 1 to 50, 1 to 20, 1 to 15, or 2 to 15; and where f is an integer from 1 to 50, 1 to 20, 1 to 15, 2 to 50, 2 to 20, 2 to 15, or 3 to 15.

Aspect 49b. The zwitterionic sidechain functionalized organosiloxane according to Aspect 49, where a is in integer from 0 to 50, b is an integer from 0 to 50, c is an integer from 0 to 50, d is an integer from 0 to 100, e is an integer from 0 to 20, and f is an integer from 1 to 20.

Aspect 50. The zwitterionic sidechain functionalized organosiloxane according to any one of Aspects 28-69, wherein each occurrence of A₂ is -(O(CH₂)ₒ)ₘ₋, each occurrence of A₃ is -(O(CH₂)ₒ)ₙ-, and each occurrence of A₆ is -(O(CH₂)ₒ)ₚ-, where m is an integer from 1 to 50, 1 to 20, 2 to 20, 2 to 50, 3 to 15, or 2 to 12; where n is an integer from 1 to 20, 2 to 20, 2 to 15, 2 to 12, 3 to 15, 3 to 12, or 5 to 20; and where o is an integer 1, 2, 3, 4, 5, or 6; and p is an integer from 1 to 20, 2 to 20, 2 to 15, 2 to 12, 3 to 15, 3 to 12, or 5 to 20.

Aspect 50b. The zwitterionic sidechain functionalized organosiloxane according to Aspects 50, where m is an integer from 2 to 20, n is an integer from 2 to 20, and o is an integer from 2 to 4; and p is an integer from 2 to 20.

Aspect 51. The zwitterionic sidechain functionalized organosiloxane according to any one of Aspects 28-69, wherein each occurrence of L₂, L₃, L₄, L₅, and L₆ is independently a C₁-C₅ alkyl.

Aspect 52. A zwitterionic sidechain functionalized organosiloxane having a structure according to the following formula 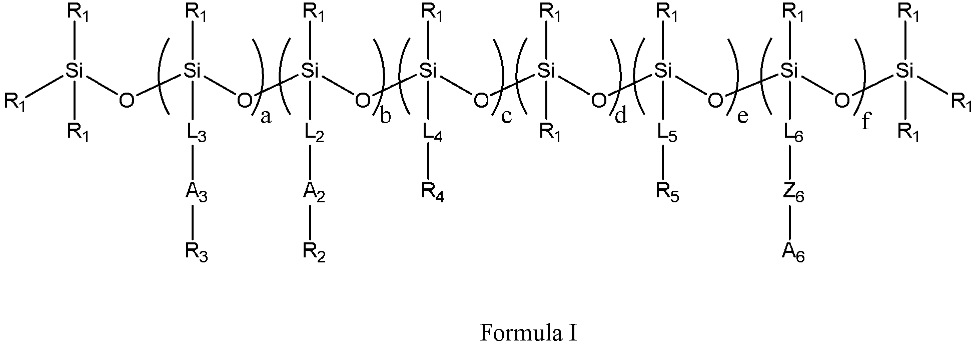 where each occurrence of R₁ is independently a substituted or unsubstituted C₁-C₅ alkyl, a substituted or unsubstituted C₁-C₅ heteroalkyl, or a substituted or unsubstituted phenyl; where each occurrence of R₂ is independently a substituted or unsubstituted C₁-C₅ alkyl, a substituted or unsubstituted C₁-C₅ heteroalkyl, or a hydroxyl; where each occurrence of R₃ is independently a reactive end group; where each occurrence of R₄ is independently a substituted or unsubstituted organosiloxane or a substituted or unsubstituted alkyl; where each occurrence of R₅ is independently a reactive end group;where each occurrence of L₂, L₃, L₄, L₅, and L₆ is independently a substituted or unsubstituted C₁-C₁₂ alkyl or a substituted or unsubstituted C₁-C₁₂ heteroalkyl; where each occurrence of A₂, A₃, and A₆ is independently a substituted or unsubstituted hydrophilic polyalkylene glycol; where each occurrence of Z₆ is a zwitterionic moiety; where a is in integer from 0 to 50, 0 to 20, 0 to 15, 1 to 50, 1 to 20, 1 to 15, or 2 to 15; where b is an integer from 0 to 50, 0 to 20, 0 to 15, 1 to 50, 1 to 20, 1 to 15, or 2 to 15; where c is an integer from 0 to 50, 0 to 20, 0 to 15, 1 to 50, 1 to 20, 1 to 15, or 2 to 15; where d is an integer from 0 to 100, 0 to 50, 0 to 20, 0 to 15, 1 to 100, 1 to 50, 1 to 30, 1 to 25, or 2 to 25; where e is an integer from 0 to 50, 0 to 20, 0 to 15, 1 to 50, 1 to 20, 1 to 15, or 2 to 15; and where f is an integer from 1 to 50, 1 to 20, 1 to 15, 2 to 50, 2 to 20, 2 to 15, or 3 to 15.

Aspect 52b. The zwitterionic sidechain functionalized organosiloxane according to Aspect 52, where a is in integer from 0 to 50, b is an integer from 0 to 50, c is an integer from 0 to 50, d is an integer from 0 to 100, e is an integer from 0 to 20, and f is an integer from 1 to 20.

Aspect 53. The zwitterionic sidechain functionalized organosiloxane according to any one of Aspects 28-69, wherein each occurrence of A₂ is -(O(CH₂)ₒ)ₘ-, each occurrence of A₃ is -(O(CH₂)ₒ)ₙ-, and each occurrence of A₆ is -(O(CH₂)ₒ)ₚ-, where m is an integer from 1 to 50, 1 to 20, 2 to 20, 2 to 50, 3 to 15, or 2 to 12; where n is an integer from 1 to 20, 2 to 20, 2 to 15, 2 to 12, 3 to 15, 3 to 12, or 5 to 20; and where o is an integer 1, 2, 3, 4, 5, or 6; and p is an integer from 1 to 20, 2 to 20, 2 to 15, 2 to 12, 3 to 15, 3 to 12, or 5 to 20.

Aspect 53b. The zwitterionic sidechain functionalized organosiloxane according to Aspect 53, where m is an integer from 2 to 20, n is an integer from 2 to 20, and o is an integer from 2 to 4; and p is an integer from 2 to 20.

Aspect 54. The zwitterionic sidechain functionalized organosiloxane according to any one of Aspects 28-69, wherein each occurrence of L₂, L₃, L₄, L₅, and L₆ is independently a C₁-C₅ alkyl.

Aspect 55. The zwitterionic sidechain functionalized organosiloxane according to any one of Aspects 28-69, wherein each occurrence of R₁ is independently -CH₃, -CH₂-CH_{3,} -CH₂-CH₂-CF₃, or phenyl.

Aspect 56. The zwitterionic sidechain functionalized organosiloxane according to any one of Aspects 28-69, wherein each occurrence of R₂ is independently methyl or hydroxyl.

Aspect 57. The zwitterionic sidechain functionalized organosiloxane according to any one of Aspects 28-69, wherein each occurrence of R₃ is independently a methoxy silane, ethoxy silane, or acetoxy silane, -OH, -Si(OCH₂CH₃)₃, -Si(OCH₃)₃, or 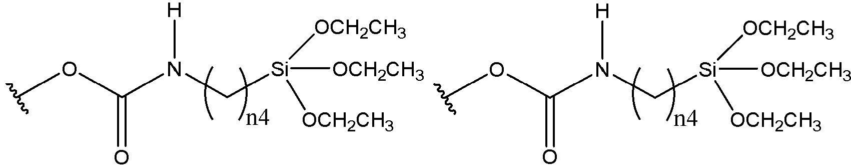 where n4 is an integer from 1 to 7.

Aspect 58. The zwitterionic sidechain functionalized organosiloxane according to any one of Aspects 28-69, wherein each occurrence of R₃ is independently selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

Aspect 59. The zwitterionic sidechain functionalized organosiloxane according to any one of Aspects 28-69, wherein each occurrence of R₃ is independently selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof.

Aspect 60. The zwitterionic sidechain functionalized organosiloxane according to any one of Aspects 28-69, wherein each occurrence of R₄ is independently -Si(CH₃)₃, -Si(CH₂CH₃)₃, -[Si(CH₃)₂-O-]ₙ₃-Si(CH₃)₃, -CF₃, or -(CF₂)ₙ₃-CF₃, where n3 is an integer 1, 2, 3, 4, 5, 6, 7, 8, 9, or 10.

Aspect 60b. The zwitterionic sidechain functionalized organosiloxane according to Aspect 60, where n3 is an integer from 1 to 10.

Aspect 61. The zwitterionic sidechain functionalized organosiloxane according to any one of Aspects 28-69, wherein each occurrence of R₅ is independently a methoxy silane, ethoxy silane, or acetoxy silane.

Aspect 62. The zwitterionic sidechain functionalized organosiloxane according to any one of Aspects 28-69, wherein each occurrence of R₅ is independently selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines.

Aspect 63. The zwitterionic sidechain functionalized organosiloxane according to any one of Aspects 28-69, wherein each occurrence of R₅ is independently selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof.

Aspect 64. The zwitterionic sidechain functionalized organosiloxane according to any one of Aspects 28-69, wherein Z₆ is nonreactive with silicone condensation cure chemistry, is nonreactive with platinum addition cure silicone chemistry, is nonreactive with epoxy cure chemistry, and/or is nonreactive with polyurethane chemistry; and wherein a+e is greater than or equal to 1, 2, 3, 4, or more.

Aspect 64b. The zwitterionic sidechain functionalized organosiloxane according to Aspect 64, wherein a+e is greater than or equal to 1.

Aspect 65. The zwitterionic sidechain functionalized organosiloxane according to any one of Aspects 28-69, wherein Z₆ is selected from the group consisting of phosphates, sulfonates or carboxylates.

Aspect 66. The zwitterionic sidechain functionalized organosiloxane according to any one of Aspects 28-69, wherein Z₆ is selected from the group consisting of aminoalkyl phosphonic acids, aminoalkyl carboxylic acids, and aminoalkyl sulfonic acids.

Aspect 67. The zwitterionic sidechain functionalized organosiloxane according to any one of Aspects 28-69, wherein Z₆ is selected from the group consisting of sulfobetaine, carboxybetaine, glycine betaine, trimethylamine *N*-oxide, and phosphoryl choline.

Aspect 68. The zwitterionic sidechain functionalized organosiloxane according to any one of Aspects 28-69, wherein a terminal end of Z₆ is positively charged.

Aspect 69. The zwitterionic sidechain functionalized organosiloxane according to any one of Aspects 28-69, wherein a terminal end of Z₆ is negatively charged.

Aspect 70. A polymer composition capable of curing on a substrate to form a surface that is resistant to biofouling or ice formation, the polymer composition comprising: (a) a base resin composition comprising (i) one or more different polymeric precursors capable of curing to form a cured resin and (ii) a polyoxyalkylene zwitterionic moiety according to any one of Aspects 1-27 that comprises reactive end groups capable of reacting with the one or more different polymeric precursors; wherein, when the base resin composition is cured to form the cured resin, the reactive end groups in the polyoxyalkylene zwitterionic moiety react with the one or more different polymeric precursors so that the polyoxyalkylene zwitterionic moiety is integrated into the cured resin.

Aspect 71. A polymer composition capable of curing on a substrate to form a surface that is resistant to biofouling or ice formation, the polymer composition comprising: (a) a base resin composition comprising (i) one or more different polymeric precursors capable of curing to form a cured resin and (ii) a zwitterionic sidechain functionalized organosiloxane according to any one of Aspects 28-69 that comprises reactive end groups capable of reacting with the one or more different polymeric precursors; wherein, when the base resin composition is cured to form the cured resin, the reactive end groups in the zwitterionic sidechain functionalized organosiloxane react with the one or more different polymeric precursors so that the zwitterionic sidechain functionalized organosiloxane is integrated into the cured resin.

Aspect 72. The polymer composition according to any one of Aspects 70-82, further comprising a lubricating liquid, wherein the lubricating liquid is chemically and physically matched with the base resin in such a way that, when cured therewith to form a cured composition, the lubricating liquid is incorporated within the cured composition.

Aspect 73. The polymer composition according to any one of Aspects 70-82, wherein the lubricating liquid comprises an amphiphilic lubricant, a partially fluorinated lubricant, a zwitterionic lubricant, or a combination thereof.

Aspect 74. The polymer composition according to any one of Aspects 70-82, wherein the lubricating liquid comprises a polysiloxane having one or more zwitterionic groups covalently attached via a polyalkyllene glycol sidechain attached thereto.

Aspect 75. The polymer composition according to any one of Aspects 70-82, wherein the lubricating liquid comprises a polysiloxane having one or more partially or fully fluorinated alkyl sidechains attached thereto.

Aspect 76. The polymer composition according to any one of Aspects 70-82, wherein the one or more different polymeric precursors comprises acrylic precursors; and wherein the reactive end groups are reactive with acrylic resins.

Aspect 77. The polymer composition according to any one of Aspects 70-82, wherein the one or more different polymeric precursors comprises condensation curable silicone precursors; and wherein the reactive end groups are reactive with condensation cure silicon resins.

Aspect 78. The polymer composition according to any one of Aspects 70-82, wherein the one or more different polymeric precursors comprises addition curable silicone precursors; and wherein the reactive end groups are reactive with addition cure silicon resins.

Aspect 79. The polymer composition according to any one of Aspects 70-82, wherein the one or more different polymeric precursors comprises epoxide precursors; and wherein the reactive end groups are reactive with epoxy resins.

Aspect 80. The polymer composition according to any one of Aspects 70-82, wherein the one or more different polymeric precursors comprises polyurethane precursors; and wherein the reactive end groups are reactive with urethane resins.

Aspect 81. The polymer composition according to any one of Aspects 70-82, wherein the polyoxyalkylene zwitterionic moiety is present in an amount from about 0.1 weight percent to about 30 weight percent, about 1 weight percent to about weight percent, about 1 weight percent to about 25 weight percent, about 1 weight percent to about 20 weight percent, about 1 weight percent to about 15 weight percent, about 1 weight percent to about 12 weight percent, about 2 weight percent to about 12 weight percent, about 2 weight percent to about 20 weight percent, about 2 weight percent to about 25 weight percent, or about 5 weight percent to about 12 weight percent based upon an entire weight of the base resin composition.

Aspect 82. The polymer composition according to any one of Aspects 70-82, wherien the zwitterionic sidechain functionalized organosiloxane is present in an amount from about 0.1 weight percent to about 30 weight percent, about 1 weight percent to about weight percent, about 1 weight percent to about 25 weight percent, about 1 weight percent to about 20 weight percent, about 1 weight percent to about 15 weight percent, about 1 weight percent to about 12 weight percent, about 2 weight percent to about 12 weight percent, about 2 weight percent to about 20 weight percent, about 2 weight percent to about 25 weight percent, about 5 weight percent to about 25 weight percent, or about 5 weight percent to about 15 weight percent based upon an entire weight of the base resin composition.

Aspect 83. An article comprising a substrate and a fouling-resistant or ice-phobic coating on a surface of the substrate, wherein the fouling-resistant or ice-phobic coating comprises a plurality of polyoxyalkylene zwitterionic moieties according to any one of Aspects 1-27.

Aspect 84. The article according to any one of Aspects 83-96, wherein the plurality of polyoxyalkylene zwitterionic moieties are covalently tethered to the substrate via covalent bonding between the reactive end groups in the polyoxyalkylene zwitterionic moieties and reactive groups on the substrate.

Aspect 85. An article comprising a substrate and a fouling-resistant or ice-phobic coating on a surface of the substrate, wherein the fouling-resistant or ice-phobic coating comprises a plurality of zwitterionic sidechain functionalized organosiloxanes according to any one of Aspects 28-69.

Aspect 86. The article according to any one of Aspects 83-96, wherein the plurality of zwitterionic sidechain functionalized organosiloxanes are covalently tethered to the substrate via covalent bonding between the reactive end groups in the zwitterionic sidechain functionalized organosiloxanes compounds and reactive groups on the substrate.

Aspect 87. An article comprising a substrate and a fouling-resistant or ice-phobic coating on a surface of the substrate, wherein the fouling-resistant or ice-phobic coating comprises a polymer composition according to any one of Aspects 70-82 that is cured to form the fouling-resistant or ice-phobic coating.

Aspect 88. The article according to any one of Aspects 83-96, wherein the fouling-resistant or ice-phobic coating further comprises a lubricating liquid chemically and physically matched with the fouling-resistant or ice-phobic coating in such a way the lubricating liquid is incorporated into the fouling-resistant or ice-phobic coating.

Aspect 89. The article according to any one of Aspects 83-96, wherein the substrate is selected from the group consisting of a polymer, a metal, a sapphire, a glass, a carbon, a ceramic, and a composite thereof.

Aspect 90. The article according to any one of Aspects 83-96, wherein the article is a ship, boat, or other marine vessel; an unmanned underwater vehicle; an aquaculture netting; a sensor; a seismic cable; or other article intended for exposure to an aqueous or marine environment.

Aspect 91. The article according to any one of Aspects 83-96, wherein the article is a drum, vat, or tank; a pipe or conduit; a membrane; or other article intended for exposure to water or aqueous systems, including aqueous waste handling systems.

Aspect 92. The article according to any one of Aspects 83-96, wherein the article is a catheter, stent, or other implantable medical device; a surgical tool; a bag or a container; or other article or surface intended for exposure to blood, bodily flood, or potential pathogens.

Aspect 93. The article according to any one of Aspects 83-96, wherein the zwitterionic moieties are stratified such that a greater concentration of the zwitterionic moieties are present on an exterior surface of the coating as compared to at or near the surface of the substrate.

Aspect 94. The article according to any one of Aspects 83-96, wherein the zwitterionic sidechain functionalized organosiloxanes are stratified such that a greater concentration of the sidechain functionalized organosiloxanes are present on an exterior surface of the coating as compared to at or near the surface of the substrate.

Aspect 95. The article according to any one of Aspects 83-96, wherein the coated surface exhibits dynamic wetting properties when exposed to water, e.g. dynamic wetting behavior can include a decrease in a water contact angle for the surface when measured over the first two minutes of exposing the surface to water

Aspect 96. The article according to any one of Aspects 83-96, wherein the coated surface exhibits fouling resistant, antifouling, and/or foul release properties.

Aspect 97. A surface modified particle comprising a polyoxyalkylene zwitterionic moiety according to any one of Aspects 1-27 wherein a reactive group of the polyoxyalkylene zwitterionic moiety is covalently attached to a surface of the particle.

Aspect 98. The surface modified particle according to any one of Aspects 97-100, wherein the particle comprises a polymer particle.

Aspect 99. The surface modified particle according to any one of Aspects 97-100, wherein the particle comprises an iron oxide particle, a silica particle, or a titanium dioxide particle.

Aspect 100. The surface modified particle according to any one of Aspects 97-100, wherein the particle has a diameter of about 500 nm to 5, about 5 µm to about 50 µm, or about 50 µm to about 500 µm.

## Claims

1. A zwitterionic sidechain functionalized organosiloxane comprising:
(i) an organosiloxane backbone;
(ii) at least one polyoxyalkylene chain having a tethered end covalently attached to the polysiloxane backbone and a free end opposite to the tethered end;
(iii) a zwitterionic moiety covalently attached at the free end of the polyoxyalkylene chain; and
(iv) at least one reactive end group.

2. The zwitterionic sidechain functionalized organosiloxane according to claim 1, wherein one or more of the polyoxyalkylene chain, the zwitterionic moiety, and the reactive end group are each covalently attached via a linker group which may be the same or different;
preferably wherein the linker group comprises a C₁-C₁₂ alkyl or heteroalkyl or a C₁-C₅ alkyl or heteroalkyl.

3. The zwitterionic sidechain functionalized organosiloxane according to any one of claims 1-2, wherein the polyoxyalkylene chains are independently selected from the group consisting of poly(ethylene glycol), poly(propylene glycol), poly(ethylene glycol-*ran*-propylene glycol), poly(ethylene glycol*-block-*propylene glycol), poly(butylene glycol), co-polymers containing poly(butylene glycol), and a combination thereof.

4. The zwitterionic sidechain functionalized organosiloxane according to any one of claims 1-3, wherein the reactive end group is selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry;
groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines;
preferably wherein the reactive end group is selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof;
preferably wherein the reactive end group is covalently attached to the organosiloxane backbone via a second polyoxyalkylene chain, via an alkyl chain, via an organosiloxane chain, and/or via a heteroalkyl chain.

5. The zwitterionic sidechain functionalized organosiloxane according to any one of the preceding claims, having a structure according to the following formula: 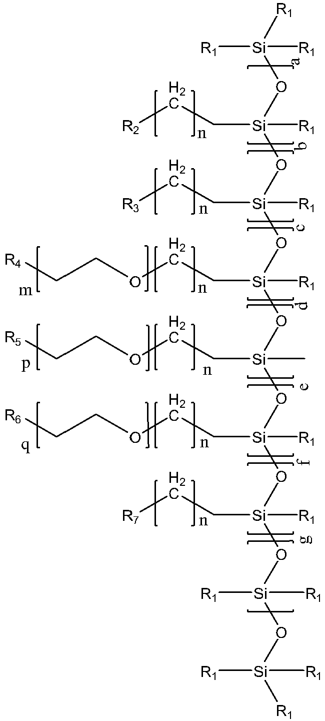
wherein each occurrence of R₁ is independently selected from the group consisting of substituted and unsubstituted C₁-C₅ alkyl and substituted and unsubstituted phenyl, and preferably where each occurrence of R₁ is independently selected from the group consisting of CH₃, -CH₂-CH₃, -CH₂-CH₂-CF₃, and phenyl;
wherein each occurrence of R₂ is independently selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines;
wherein each occurrence of R₃ is independently a biocidal moiety, a zwitterionic moiety, or a non-reactive polyoxyalkylene;
wherein each occurrence of R₄ is independently a functional group such as -NH₂, -NR'H, -COOH, or -OH;
wherein each occurrence of R₅ is independently a zwitterionic moiety;
wherein each occurrence of R₆ is independently a biocidal moiety;
wherein each occurrence of R₇ is independently a polyorganosiloxane having a structure from any of **-**Si(CH₃)₃, -Si(CH₂CH₃)₃, [-Si(CH₃)₂-O-]ᵢ-Si (CH₃)₃ where i can be 1-10 or a short fluorinated moiety such as -CF₃ or -(CF₂)ⱼ-CF₃, where j can be 1-10;
where a is in integer from 1 to 20;
where b is an integer from 0 to 20
where c is an integer from 0 to 20;
where d is an integer from 1 to 20;
where e is an integer from 0 to 20;
where f is an integer from 0 to 20;
where g is an integer from 0 to 50;
where each occurrence of n is independently an integer from 0 to 5;
where each occurrence of m is independently an integer from 1 to 20;
where each occurrence of p is independently an integer from 1 to 20; and
where each occurrence of q is independently an integer from 1 to 20;
preferably wherein R₅ comprises a phosphorylcholine;

6. A zwitterionic sidechain functionalized organosiloxane having a structure according to the following formula 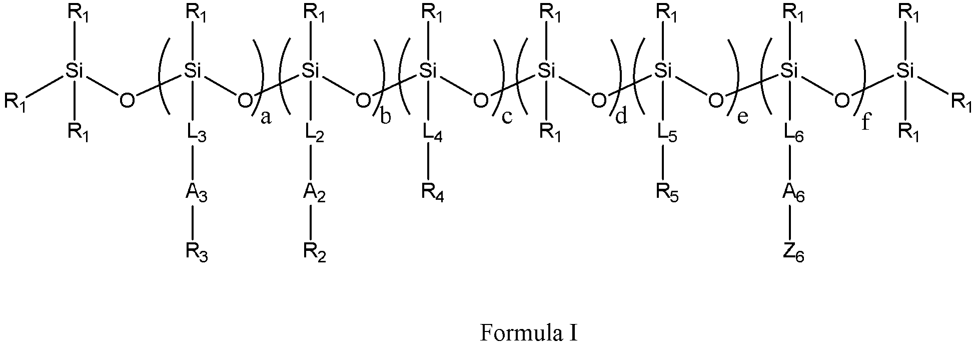
where each occurrence of R₁ is independently a substituted or unsubstituted C₁-C₅ alkyl, a substituted or unsubstituted C₁-C₅ heteroalkyl, or a substituted or unsubstituted phenyl;
where each occurrence of R₂ is independently a substituted or unsubstituted C₁-C₅ alkyl, a substituted or unsubstituted C₁-C₅ heteroalkyl, or a hydroxyl;
where each occurrence of R₃ is independently a reactive end group;
where each occurrence of R₄ is independently a substituted or unsubstituted organosiloxane or a substituted or unsubstituted alkyl;
where each occurrence of R₅ is independently a reactive end group;
where each occurrence of L₂, L₃, L₄, L₅, and L₆ is independently a substituted or unsubstituted C₁-C₁₂ alkyl or a substituted or unsubstituted C₁-C₁₂ heteroalkyl;
where each occurrence of A₂, A₃, and A₆ is independently a substituted or unsubstituted hydrophilic polyalkylene glycol;
where each occurrence of Z₆ is a zwitterionic moiety;
where a is an integer from 0 to 50, b is an integer from 0 to 50, c is an integer from 0 to 50, d is an integer from 0 to 100, e is an integer from 1 to 20, and f is an integer from 1 to 20.

7. The zwitterionic sidechain functionalized organosiloxane according to claim 6, wherein each occurrence of A₂ is -(O(CH₂)ₒ)ₘ-, each occurrence of A₃ is -(O(CH₂)ₒ)ₙ-, and each occurrence of A₆ is -(O(CH₂)ₒ)ₚ-, where m is an integer from 2 to 20, n is an integer from 2 to 20, and o is an integer from 2 to 4; and p is an integer from 2 to 20.

8. The zwitterionic sidechain functionalized organosiloxane according to claim 6 or claim 7, wherein each occurrence of L₂, L₃, L₄, L₅, and L₆ is independently a C₁-C₅ alkyl;
and / or wherein each occurrence of R₁ is independently -CH₃, -CH₂-CH₃, -CH₂-CH₂-CF₃, or phenyl;
and / or wherein each occurrence of R₂ is independently methyl or hydroxyl;
and / or wherein each occurrence of R₃ is independently a methoxy silane, ethoxy silane, or acetoxy silane, -OH, -Si(OCH₂CH₃)₃, -Si(OCH₃)₃, or 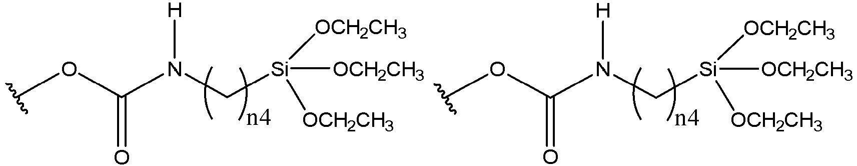
where n4 is an integer from 1 to 7;
and / or wherein each occurrence of R₃ is independently selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines;
and / or wherein each occurrence of R₃ is independently selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof;
and / or wherein each occurrence of R₄ is independently -Si(CH₃)₃, -Si(CH₂CH₃)₃,
-[Si(CH₃)₂-O-]ₙ₃-Si(CH₃)₃, -CF₃, or -(CF₂)ₙ₃-CF₃, where n3 is an integer from 1 to 10;
and / or wherein each occurrence of R₅ is independently a methoxy silane, ethoxy silane, or acetoxy silane;
and / or wherein each occurrence of R₅ is independently selected from groups that can undergo addition cure chemistry such as vinyl groups that are reactive for platinum addition cure silicone chemistry; groups that can undergo condensation cure chemistry such as alkoxy, enoxy, oxime, primary amine, secondary amine, ethoxy silane, methoxy silane, and acetoxy silane groups that are reactive for silicone condensation cure chemistry; groups that can undergo hydrosilylation chemistry; groups that can undergo epoxy chemistry such as epoxide groups; groups that can undergo urethane/urea chemistry; groups that can undergo amino crosslinking chemistry; groups that can undergo click chemistry; groups that can adhere to a solid substrate such as a thiol, a carboxylic acid and its esters or anhydrides, an alkoxy silane, a chlorosilane, a phosphonic or phosphinic or phosphoric acid and its esters or anhydrides, an azide, an alkyne, an alkene, an aldehyde, an acetal, and bio-derived or bioconjugates for binding such as catechols and catecholamines;
and / or wherein each occurrence of R₅ is independently selected from the group consisting of alkoxy, enoxy, oxime, primary amine, secondary amine, ethoxy silane, methoxy silane, acetoxy silane, vinyl groups, hydrides, epoxide groups, isocyanate groups, hydroxyl groups, (meth)acrylate groups, and combinations thereof;
and / or wherein Z₆ is selected from the group consisting of phosphates, sulfonates or carboxylates;
and / or wherein Z₆ is selected from the group consisting of aminoalkyl phosphonic acids, aminoalkyl carboxylic acids, and aminoalkyl sulfonic acids;
and / or wherein Z₆ is selected from the group consisting of sulfobetaine, carboxybetaine, glycine betaine, trimethylamine *N*-oxide, and phosphoryl choline;
and / or wherein a terminal end of Z₆ is positively charged;
and / or wherein a terminal end of Z₆ is negatively charged.

9. A polymer composition capable of curing on a substrate to form a surface that is resistant to biofouling or ice formation, the polymer composition comprising:
(a) a base resin composition comprising (i) one or more different polymeric precursors capable of curing to form a cured resin and (ii) a zwitterionic sidechain functionalized organosiloxane according to any one of the preceding claims that comprises reactive end groups capable of reacting with the one or more different polymeric precursors;
wherein, when the base resin composition is cured to form the cured resin, the reactive end groups in the zwitterionic sidechain functionalized organosiloxane react with the one or more different polymeric precursors so that the zwitterionic sidechain functionalized organosiloxane is integrated into the cured resin.

10. The polymer composition according to claim 9, further comprising a lubricating liquid, wherein the lubricating liquid is chemically and physically matched with the base resin in such a way that, when cured therewith to form a cured composition, the lubricating liquid is incorporated within the cured composition.

11. The polymer composition according to claim 10 wherein:
the lubricating liquid comprises an amphiphilic lubricant, a partially fluorinated lubricant, a zwitterionic lubricant, or a combination thereof; or
wherein the lubricating liquid comprises a polysiloxane having one or more zwitterionic groups covalently attached via a polyalkyllene glycol sidechain attached thereto; or
wherein the lubricating liquid comprises a polysiloxane having one or more partially or fully fluorinated alkyl sidechains attached thereto.

12. The polymer composition according to claim 9, wherein the one or more different polymeric precursors comprises acrylic precursors; and wherein the reactive end groups are reactive with acrylic resins; or
wherein the one or more different polymeric precursors comprises condensation curable silicone precursors; and wherein the reactive end groups are reactive with condensation cure silicon resins; or
wherein the one or more different polymeric precursors comprises addition curable silicone precursors; and wherein the reactive end groups are reactive with addition cure silicon resins; or
wherein the one or more different polymeric precursors comprises epoxide precursors; and wherein the reactive end groups are reactive with epoxy resins; or
wherein the one or more different polymeric precursors comprises polyurethane precursors; and wherein the reactive end groups are reactive with urethane resins.

13. An article comprising a substrate and a fouling-resistant or ice-phobic coating on a surface of the substrate, wherein the fouling-resistant or ice-phobic coating comprises a plurality of zwitterionic sidechain functionalized organosiloxanes according to any one of claims 1 to 8.

14. An article comprising a substrate and a fouling-resistant or ice-phobic coating on a surface of the substrate, wherein the fouling-resistant or ice-phobic coating comprises a polymer composition according to any one of claims 9 that is cured to form the fouling-resistant or ice-phobic coating.

15. The article according to claim 14, wherein the fouling-resistant or ice-phobic coating further comprises a lubricating liquid chemically and physically matched with the fouling-resistant or ice-phobic coating in such a way the lubricating liquid is incorporated into the fouling-resistant or ice-phobic coating; or
wherein the substrate is selected from the group consisting of a polymer, a metal, a sapphire, a glass, a carbon, a ceramic, and a composite thereof; or
wherein the article is a ship, boat, or other marine vessel; an unmanned underwater vehicle; an aquaculture netting; a sensor; a seismic cable; or other article intended for exposure to an aqueous or marine environment; or
wherein the article is a drum, vat, or tank; a pipe or conduit; a membrane; or other article intended for exposure to water or aqueous systems, including aqueous waste handling systems; or
wherein the article is a catheter, stent, or other implantable medical device; a surgical tool; a bag or a container; or other article or surface intended for exposure to blood, bodily flood, or potential pathogens.
